# EUROPEAN PATENT SPECIFICATION

(11) **EP 4 439 271 B1**
(45) Date of publication and mention of the grant of the patent: **15.10.2025**
(21) Application number: 24161525.1
(22) Date of filing: 05.03.2024
(51) Int. Cl.: G06F 3/12, G06Q 10/20

(54) **INFORMATION PROCESSING SYSTEM, NOTIFICATION METHOD, SERVICE MANAGEMENT SYSTEM, AND CARRIER MEANS**
INFORMATIONSVERARBEITUNGSSYSTEM, BENACHRICHTIGUNGSVERFAHREN, DIENSTVERWALTUNGSSYSTEM UND TRÄGERMITTEL
SYSTÈME DE TRAITEMENT D'INFORMATIONS, PROCÉDÉ DE NOTIFICATION, SYSTÈME DE GESTION DE SERVICE ET MOYENS DE SUPPORT

(30) Priority: 20.03.2023 JP 2023044060; 24.01.2024 JP 2024009034
(43) Date of publication of application: 02.10.2024
(73) Proprietor: Ricoh Company, Ltd., Tokyo 143-8555 (JP)
(72) Inventor: YAMAMURA, Hiroki, Tokyo, 143-8555 (JP); MATSUE, Natsumi, Tokyo, 143-8555 (JP)
(74) Representative: SSM Sandmair

(56) References cited:
- US-A1- 2007 279 668
- US-A1- 2011 270 771

## Description

### BACKGROUND

### Technical Field

Embodiments of the present disclosure relate to an information processing system, a notification method, a service management system, and a carrier means.

### Related Art

In devices such as image forming apparatuses, motors or clutches perform mechanical operations to print with color materials. Accordingly, various types of service (first service) such as cleaning and parts replacement are sometimes to be performed. For example, various service works are performed in a case where the device is a large-sized image forming apparatus such as a commercial printer. For example, the service work is performed manually by, for example, a user on the image forming apparatuses. Alternatively, an administrator changes setting values of the image forming apparatuses from a terminal apparatus, for example.

A contract is sometimes concluded between a service provider and a customer regarding, for example, the period of device service and service contents (see, for example, Japanese Unexamined Patent Application Publication No. 2017-078997). Japanese Unexamined Patent Application Publication No. 2017-078997 describes a technology of restricting service provision stepwise when a contract period expires.

US 2011/0270771 A1 discloses a system and method for determining when to escalate from one support level to a higher support level in assisting a user resolve a problem with a device. The method includes storing information on past users' interactions with a self help server during prior self help sessions, the self help server providing a first remote support level for troubleshooting a problem with a device. Information is stored on a current user's interactions with the self help server during a current self help session for troubleshooting the current user's problem with a device. A determination of when to provide for escalation to a higher remote support level for troubleshooting the current user's problem with the device is based on the stored information on the past users' interactions and the current user's interactions.

US 2007/0279668 A1 discloses methods and systems for a printer controller in a printing system to flexibly define conditions for notification to one or more recipients of intervention states of the printing system. The time delay for transmitting escalated intervention notification message may be dynamically determined in accordance with present operating parameters of the printing system. Other aspects provide that the recipients of such messages and the form of such messages may be dynamically determined in accordance with present operating parameters of the printing system. Policy rules may define the predicate conditions for determining the timeout values for escalation and for determining the message format and recipients.

However, in the related art, notification of execution of a service (second service) based on a device status to an appropriate notification destination is not performed. Further, in printing factories in fields such as commercial printing or industrial printing, the maximization of the operation time of a device (i.e., the maximization of uptime is desired). For this reason, there is a need to efficiently perform effective services. Accordingly, a service for the device is sometimes performed by an operator of the device. Performing a service by an operator may be referred to as an "operator maintenance." In this case, for example, items to be subjected to the operator maintenance are defined in a contract between a company (customer engineer) providing the service for the device and the customer of the device. In other words, for the same module to be subjected to a service, sometimes the operator performs the service and sometimes the customer engineer performs the service.
For this reason, when the operator maintenance contract is concluded, a notification to perform a service is to be sent to an appropriate notification destination.

### SUMMARY

In view of the above situation, an object of an embodiment of the present disclosure is to provide a technology of sending a notification to perform a service to an appropriate notification destination on the basis of a device status. The invention is defined by the appended independent claims 1, 15 and 16. The dependent claims describe advantageous embodiments of the invention.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is an illustration of how to determine an appropriate notification destination of additional maintenance, according to an embodiment of the present disclosure;
FIG. 2 is a schematic diagram illustrating a system configuration of a service management system, according to an embodiment of the present disclosure;
FIG. 3 is a block diagram illustrating a hardware configuration of a digital front end (DFE), according to an embodiment of the present disclosure;
FIG. 4 is a schematic diagram illustrating a configuration of an image forming apparatus, according to an embodiment of the present disclosure;
FIG. 5 is a schematic diagram illustrating a modification of the configuration of the image forming apparatus, according to an embodiment of the present disclosure;
FIG. 6 is a block diagram illustrating a hardware configuration of a computer, according to an embodiment of the present disclosure;
FIG. 7 is a block diagram illustrating functional configurations of a server apparatus, a terminal apparatus, and the image forming apparatus, according to an embodiment of the present disclosure;
FIG. 8 is a table of device status information stored in a device status information storage unit, according to an embodiment of the present disclosure;
FIG. 9 is a table of device management information stored in a device management information storage unit, according to an embodiment of the present disclosure;
FIG. 10 is a table of failure maintenance information stored in a failure maintenance information storage unit, according to an embodiment of the present disclosure;
FIG. 11 is a table of maintenance level contract information stored in a maintenance level contract information storage unit, according to an embodiment of the present disclosure;
FIG. 12 is a table of maintenance notification destination information stored in a maintenance notification destination information storage unit, according to an embodiment of the present disclosure;
FIG. 13 is a table of maintenance execution log information stored in a maintenance execution log information storage unit, according to an embodiment of the present disclosure;
FIG. 14A, FIG. 14B, and FIG. 14C are tables of additional maintenance information, regular maintenance information, and maintenance information stored in a maintenance information storage unit, respectively, according to an embodiment of the present disclosure;
FIG. 15 is a flowchart of a process in which a notification destination determination unit determines a notification destination to which an execution of additional maintenance is notified, according to an embodiment of the present disclosure;
FIG. 16 is a diagram illustrating a maintenance execution log screen, according to an embodiment of the present disclosure;
FIG. 17 is a diagram illustrating a maintenance execution rate screen, according to an embodiment of the present disclosure;
FIG. 18 is a diagram illustrating a maintenance execution rate details display screen, according to an embodiment of the present disclosure;
FIG. 19 is a diagram illustrating a maintenance execution rate screen on which a comment proposing a change of a maintenance level is displayed, according to an embodiment of the present disclosure;
FIG. 20 is a flowchart of a process in which the server apparatus recommends an application for the change of a maintenance level, according to an embodiment of the present disclosure;
FIG. 21 is a diagram illustrating a maintenance execution rate screen on which a maintenance level is displayed for each of the image forming apparatuses, according to an embodiment of the present disclosure;
FIG. 22 is a diagram illustrating a maintenance execution rate screen on which a comment proposing the change of a maintenance level and the maintenance level are displayed for each of the image forming apparatuses, according to an embodiment of the present disclosure;
FIG. 23 is a diagram illustrating a maintenance execution rate details display screen of an image forming apparatus, according to an embodiment of the present disclosure;
FIG. 24 is a flowchart of a process in which the server apparatus makes a proposal for changing a maintenance level, according to an embodiment of the present disclosure;
FIG. 25 is a diagram illustrating an accelerated execution proposal screen that notifies a recommendation for an accelerated execution, according to an embodiment of the present disclosure;
FIG. 26 is a diagram illustrating a modification of the accelerated execution proposal screen for regular maintenance, according to an embodiment of the present disclosure;
FIG. 27 is a diagram illustrating a guidance screen, according to an embodiment of the present disclosure;
FIG. 28A to FIG. 28D are schematic diagrams each of which illustrates maintenance performed using an augmented reality headset, according to an embodiment of the present disclosure;
FIG. 29 is a diagram illustrating a display example of a mail text that notifies a customer engineer that additional maintenance has occurred when a notification unit notifies the customer engineer, according to an embodiment of the present disclosure;
FIG. 30 is a diagram illustrating service-level agreement (SLA) information, according to an embodiment of the present disclosure;
FIG. 31 is a diagram illustrating maintenance level contract information in which a maintenance level is replaced with an SLA level, according to an embodiment of the present disclosure;
FIG. 32 is an entire schematic view of a liquid discharge apparatus, according to an embodiment of the present disclosure;
FIG. 33 is a schematic diagram illustrating a hardware configuration of a three-dimensional (3D) printer, according to an embodiment of the present disclosure; and
FIG. 34 is a diagram illustrating a progress status screen displayed on a display that a control device includes, according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of a service management system and a notification method performed by the service management system are described.

### Additional Maintenance

Maintenance of an image forming apparatus is diverse including simple maintenance such as cleaning of the scan face of a scanner and professional maintenance such as voltage adjustment of a charging device. As known in the art, a customer engineer typically visits a customer to perform maintenance. On the other hand, there is an attempt to keep a device in good condition without interfering with printing work on site by allowing a user (who may be an end user or an administrator) on the customer side to perform maintenance having a light work load.

Accordingly, the user has to perform regular maintenance in addition to the daily task of producing printed material. The regular maintenance serves as a first service according to an embodiment of the present disclosure. Further, a server apparatus described below can detect a sign of failure in advance by applying the device status information described below transmitted from the image forming apparatus to a prediction model. Accordingly, extra additional maintenance is to be performed. The additional maintenance serves as a second service according to one embodiment of the present disclosure. For this reason, the regular maintenance and the additional maintenance are to be performed efficiently while preventing the production of printed material from being hindered.

Since the maximization of an operating time period of a device (i.e., the maximization of uptime) is desired as described above, an operator maintenance contract that defines maintenance of a device to be performed by an operator of the device is sometimes concluded. In the following description, the maintenance to be performed by the user may be referred to simply as an "operator maintenance." Regarding the operator maintenance, the operator of the device does not have to perform all maintenance, and the contract defines maintenance to be performed by the operator according the level of difficulty of maintenance. Maintenance other than the operator maintenance is performed by a customer engineer. Accordingly, in the operator maintenance, the service management system has to perform a process of determining a notification destination of maintenance according to a module to be subjected to the maintenance. In most cases, the level of difficulty of maintenance varies according to modules to be subjected to the maintenance or internal parts of the device.

Accordingly, an entity with which a contract for the service management system is concluded or that purchase a program for the service management system is, for example, a service providing company that performs maintenance. The service management system or the program is used, for example, between the service providing company and a company with which the service is provided. Examples of the notification destination include a person in charge of providing the service, a customer engineer, and a user (enterprise customer) with which the service is provided. When the notification destination is the user (enterprise customer), the notification is sent to the image forming apparatus. Alternatively or in addition, the notification may be sent to an administrator of the user (enterprise customer) by, for example, e-mail. Further, the notification destination may be subdivided into a development department, the administrator of the user, a general user, and individual general users.

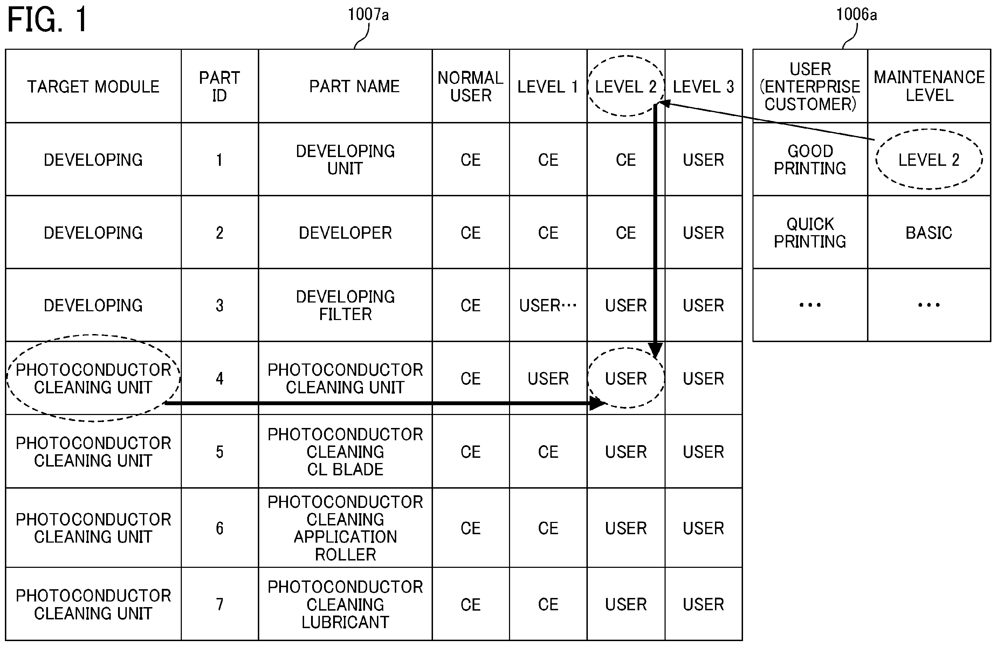

FIG. 1 is an illustration of how to determine an appropriate notification destination for additional maintenance, according to the present embodiment. As described in detail below, the server apparatus manages maintenance notification destination information 1007a in a maintenance notification destination information storage unit, and manages maintenance level contract information 1006a in a maintenance level contract information storage unit. The maintenance notification destination information 1007a serves as service notification destination information according to one embodiment of the present disclosure.

When additional maintenance occurs, a module to be subjected to the additional maintenance is to be performed is determined. In the following description, the module to be subjected to the additional maintenance may be referred to as a "target module." FIG. 1 illustrates a case where the target module is a photoconductor cleaning unit. Further, since the image forming apparatus in which the additional maintenance occurs is identified, a user (enterprise customer) who has a contract for the maintenance service of the image forming apparatus is also identified. The maintenance level of the enterprise customer is determined on the basis of the maintenance level contract information 1006a. FIG. 1 illustrates a case where the maintenance level of the enterprise customer is level 2. The server apparatus can identify a person in charge of performing the maintenance (i.e., a notification destination) associated with the target module and the maintenance level on the basis of the maintenance notification destination information 1007a.

As described above, the service management system according to the present embodiment can notify an appropriate notification destination of the execution of additional maintenance on the basis of a device status when an operator maintenance contract is concluded.

### Terms

The term "service" refers to maintenance, management, repair, or work required for maintenance, management, or repair, which are performed so that the device can continuously perform expected functions. The service is not necessarily limited only to the prevention of failures. In the present embodiment, the term "maintenance" is used as an example to describe such a service.

The device may be any machine or structure on which maintenance is to be performed. In the description of the present embodiment, an image forming apparatus serves as the device. For example, the image forming apparatus prints on a sheet of paper. Alternatively, the image forming apparatus is a three-dimensional (3D) printer or a printer for apparel products.

The term "maintenance schedule" refers to information in which a schedule of maintenance is registered in, for example, a calendar or a timetable.

The sign of failure is a symptom or a harbinger indicating that a failure is about to occur. A failure may have already occurred at the time when the sign of failure is detected.

The priority of maintenance is a degree according to which maintenance should be performed in order. The priority of maintenance may be referred to as "importance." Since the regular maintenance is scheduled to be performed periodically, the priority of the regular maintenance is higher than the priority of the additional maintenance. The priority of the additional maintenance is lower than the priority of the regular maintenance.

The term "acceleration" or "accelerated" refers to expediting the schedule of an event planned to be implemented in the near future in accordance with the situation. In the present embodiment, the term "acceleration" or "accelerated" refers to performing the regular maintenance before the scheduled date (or scheduled time).

### System Configuration

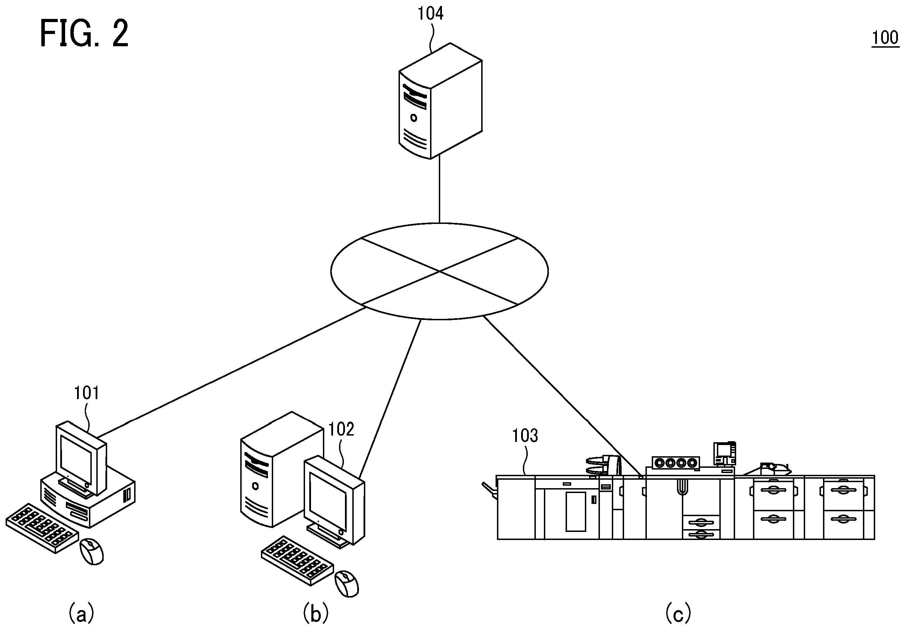

FIG. 2 is a schematic diagram illustrating a system configuration of a service management system 100 according to the present embodiment. The service management system 100 includes a server apparatus 104, a digital front end (DFE) 102, and an image forming apparatus 103. The service management system 100 may include a terminal apparatus 101. Alternatively, the terminal apparatus 101 may be omitted.

The terminal apparatus 101 and the DFE 102 can communicate with each other through a network N. The network includes, for example, a local area network (LAN) in a facility in which the image forming apparatus 103 is provided. The network further includes the Internet when the DFE 102 is provided on the Internet. For example, the DFE 102 and the image forming apparatuses 103 are connected on a one-to-one basis through a dedicated network. Alternatively, the DFE 102 and the image forming apparatus 103 are connected through a network. For example, the DFE 102 and the image forming apparatus 103 is configured as a single entity. Alternatively, the DFE 102 and the image forming apparatus 103 are attachable to each other and detachable from each other.

A web browser operates in the terminal apparatus 101. The web browser accesses a server that the DFE 102 includes to display input operation screens for task creation, schedule registration, and task execution. The terminal apparatus 101 receives operations such as task creation, schedule registration, and task execution on the input screens from the administrator and requests the received operations to the DFE 102.

In order to log in to the DFE 102, the administrator inputs a user identifier (ID) and a password to the terminal apparatus 101. The terminal apparatus 101 transmits the user ID and the password to the DFE 102. When authentication by the DFE 102 is successful, whether a general user or the administrator is identified.

A screen to be displayed or items to be input may vary between the general user or the administrator. Alternatively, an authentication server may perform the authentication of the administrator.

When the authentication is successful and the administrator logs in, access rights to task creation, schedule registration, and task execution are assigned. For the general user, an access right to task execution is assigned.

The terminal apparatus 101 is, for example, a personal computer (PC), a smartphone, a tablet computer, a personal digital assistant (PDA), or a wearable PC such as smart glasses and a smart watch. Further, the terminal apparatus 101 may be any suitable device, terminal, or apparatus, provided that the device, terminal, or apparatus includes a communication capability and a web browser or application software dedicated to the DFE 102 operates on the device, terminal, or apparatus. For example, the terminal apparatus 101 may be a car navigation system, a game console, or a television receiver.

When a web browser also operates on the image forming apparatus 103, the administrator can operate the image forming apparatus to request the DFE 102 to perform task creation, schedule registration, and task execution.

Alternatively, the DFE 102 can display an input operation screen on a display for a console and receive processing of task creation, schedule registration, and task execution from a keyboard. In this case, the terminal apparatus 101 can be omitted from the service management system 100.

The DFE 102 is a controller that performs, for example, the reception of a printing job to be executed by the image forming apparatus 103, image processing (Raster Image Processor or RIP), progress management during the execution, and abnormality monitoring. The DFE 102 receives processing of task creation, schedule registration, and task execution from the terminal apparatus 101. In other words, the DFE 102 provides the administrator with a user interface (input operation screen) for operating the image forming apparatus 103. The DFE 102 includes one or more information processing apparatuses.

The DFE 102 generates screen information of a screen displayed by the web browser. The screen information is a program written in a HyperText Markup Language (HTML), an Extensible Markup Language (XML), a script language, and a cascading style sheet (CSS). Typically, the HTML defines the structure of a web page. The script language defines the operation of the web page. The CSS defines the style of the web page. Further, an application program implemented by the cooperation of the screen information on the client side and an application program or a database on the server side is referred to as a web application program. In the present embodiment, the terminal apparatus 101 and the DFE 102 cooperate with each other to execute the web application program.

In response to a request from the terminal apparatus 101 or the image forming apparatus 103, the DFE 102 performs the processing of registering a task or a task schedule in a database and processing of executing a task on the image forming apparatus, such as changing device settings and requesting an operation.

The image forming apparatus 103 executes a printing job in response to a request received by the DFE 102. The image forming apparatus 103 has a function of printing an image on a sheet. The image is formed by a printing method such as laser printing, inkjet printing, thermal printing, screen printing, or intaglio printing. Further, the image forming apparatus 103 may have a function of a multifunction peripheral (multifunction printer) or a multi-function peripheral/product/printer (MFP). The image forming apparatus 103 may be referred to as, for example, a printer or a printing apparatus. Alternatively, the image forming apparatus 103 may be, for example, a 3D printer or a direct to garment (DTG) printer.

The image forming apparatus 103 according to the present embodiment may be a commercial printer. The commercial printer is a device not for printing a printed material for internal use by, for example, an employee in a company, but a device for commercial printing in which a printed material is a commercial product. In the commercial printing, the image forming apparatus 103 outputs a printed material used for business activities of general companies and organizations. For example, in the commercial printing, the image forming apparatus 103 may output leaflets, brochures, posters, catalogs, company brochures, and manuals. An image forming apparatus for office use and an image forming apparatus for commercial use are different from each other typically in printing speed, image quality, or the type or size of a sheet of paper that supports printing, for example.

The configuration and functions of the present embodiment are applicable to apparatuses other than the image forming apparatus 103. Examples of the apparatuses other than the image forming apparatus 103 include a projector (PJ), an electronic whiteboard, a videoconference terminal, digital signage, a head-up display (HUD) device, an industrial machine, an imaging device, a sound collecting device, a medical device, a networked home appliance, and a game console.

The server apparatus 104 is one or more information processing systems that execute processing relating to maintenance. In other words, the server apparatus 104 receives device status information 1001a from the image forming apparatus 103, determines whether there is a sign of failure, and determines the recommended execution time period for additional maintenance.

The server apparatus 104 resides, for example, either in a cloud environment or an on-premises environment. The "cloud" refers to a usage pattern of information processing in which resources on a network are used or accessed without identifying specific hardware resources. The "on-premises" refers to operating a system such as a server or software installed in the premises of a facility that can be managed by a person in charge on the user side.

For example, the server apparatus 104 is independent as illustrated in FIG. 2. Alternatively, the server apparatus 104 is configured as a single entity integrated with the DFE 102. Still alternatively, the image forming apparatus 103 may have a function of the server apparatus 104.

### Hardware Configuration

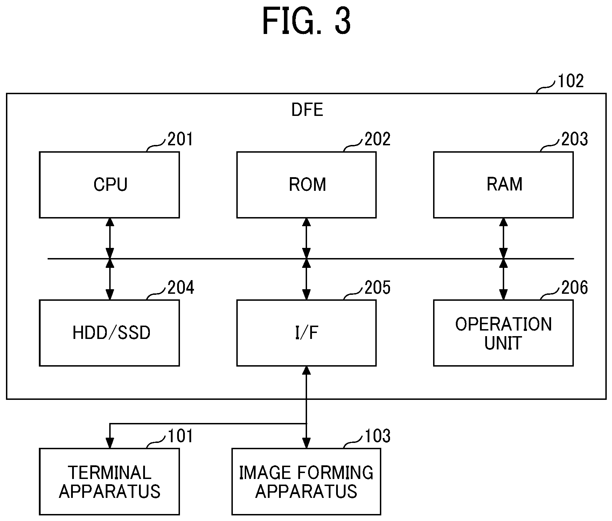

Hardware configurations of the DFE 102, the image forming apparatus 103, and the server apparatus 104 are described with reference to FIG. 3 to FIG. 6.

### DFE

FIG. 3 is a block diagram illustrating a hardware configuration of the DFE 102 according to the present embodiment. The DFE 102 has the same or substantially the same configuration as a configuration of a computer. The DFE 102 includes a central processing unit (CPU) 201, a read-only memory (ROM) 202, a random-access memory (RAM) 203, a hard disk drive (HDD)/solid-state drive (SSD) 204, an interface (I/F) 205, and a control panel 206.

The CPU 201 uses the RAM 203 as a work area to execute a program stored in the ROM 202.

The HDD/SSD 204 is used as a storage unit and stores information on a task and a schedule. The information stored in the HDD/SSD 204 may be used by the CPU 201 when executing the read program.

The I/F 205 is an interface via which the DFE 102 can communicate with the image forming apparatus 103 and the terminal apparatus 101.

The control panel 206 includes a touch panel and displays, for example, the status of the image forming apparatus, a task schedule, and task content on a screen. Further, the control panel 206 receives input from a user (an administrator or a general user) who performs a task or an administrator who creates a task or registers a schedule.

### Image Forming Apparatus

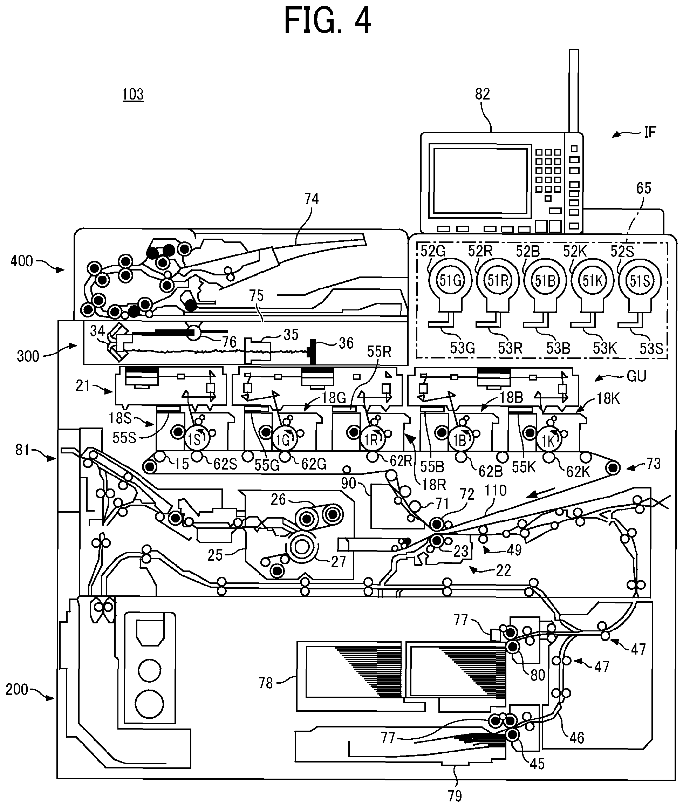

FIG. 4 is a schematic diagram illustrating a configuration of the image forming apparatus 103 according to the present embodiment. The image forming apparatus 103 is an electrophotographic image forming apparatus. The image forming apparatus 103 includes, for example, a printer 81, a feeder 200, a scanner 300, and an automatic document feeder 400. The image forming apparatus 103 according to embodiments of the present disclosure can be any suitable printing apparatus including a part of the printer 81, the feeder 200, the scanner 300, and the automatic document feeder 400, provided that the image forming apparatus has a printing capability of printing and outputting printed material, and is not limited by the name.

The printer 81 includes an image forming unit GU including five developing stations 18S, 18G, 18R, 18B, and 18K that respectively form images of colors of special color (S), invisible green (G), invisible red (R), invisible blue (B), and black (K). Suffixes S, Y, M, C, and K are assigned to reference numerals (18) of components that are used to form the special color, invisible green, invisible red, invisible blue, and black toner images, respectively. The same applies to other reference numerals used in the following description. Further, in the following description, the letters S, G, R, B, and K may indicate a special color, invisible green, invisible red, invisible blue, and black, respectively. The special color is a general term for colors different from any of invisible green, invisible red, invisible blue, and black.

The invisible green color refers to a green color which can be visually recognized under invisible light but is hardly visually recognized under visible light. The invisible red color refers to a red color which can be visually recognized under invisible light but is hardly visually recognized under visible light. The invisible blue color refers to a blue color which can be visually recognized under invisible light but is hardly visually recognized under visible light. The printer 81 superimposes invisible green, invisible red, and invisible blue to express any desired invisible color (a color that can be visually recognized under invisible light but is hardly recognized under visible light). The black color refers to a black color that can be visually recognized under visible light. The special color refers to a special (spot) color that can be visually recognized under visible light.

Visible light is electromagnetic radiation having a wavelength that is perceived as light by humans. Invisible light is electromagnetic radiation having a wavelength other than the wavelength of visible light. In the present embodiment, the invisible light is long-wavelength ultraviolet light emitted by, for example, a black light. Further, in the present embodiment, the invisible color is transparent under visible light such as light emitted by a fluorescent lamp and sunlight, and can be visibly recognized under invisible light such as ultraviolet light emitted by a black light.

Specifically, an image of the invisible green color is implemented by invisible green toner. In the following description, invisible green toner is referred to as "G toner." An image of the invisible red color is implemented by invisible red toner. In the following description, invisible red toner is referred to as "R toner." An image of the invisible blue color is implemented by invisible blue toner. In the following description, invisible blue toner is referred to as "B toner." An image of an invisible color other than the invisible green color, the invisible red color, and the invisible blue color is implemented by superimposing at least two invisible color toners of the G toner, the R toner, and the B toner. Invisible black color that is a black color visible under invisible light is implemented by causing none of the G toner, the R toner, and the B toner to adhere. An image of the special color that is visible under visible light is implemented by special color toner. In the following description, special color toner is referred to as "S toner." An image of the black color that is visible under visible light is implemented by black toner. In the following description, black toner is referred to as "K toner."

In the present embodiment, the invisible color toner is produced by combining transparent toner (clear toner) and a transparent phosphor. In other words, the invisible color toner is typically produced using clear toner as a base. The transparent phosphor is, for example, a transparent fluorescent pigment or a transparent fluorescent dye. Further, in the present embodiment, the invisible color toner is pulverization toner having a fixing temperature higher than the fixing temperature of the polymerization toner. Alternatively, the invisible color toner may be polymerization toner.

In a housing of the printer 81, for example, an optical writing device 21, an intermediate transfer device 73, a secondary transfer device 22, a registration roller pair 49, and a fixing device 25 employing a belt fixing system are arranged, in addition to the developing stations 18S, 18G, 18R, 18B, and 18K.

The optical writing device 21 includes, for example, a light source, a polygon mirror, an f-θ lens, and a reflection mirror. The optical writing device 21 irradiates the faces of photoconductors 1S, 1G, 1R, 1B, and 1K with laser light according to image data.

The developing stations 18S, 18G, 18R, 18B, and 18K include, for example, a charging roller (charging means), a developing device (developing means), a drum cleaning device, and a discharge lamp (electric-charge removing means), in addition to the photoconductors 1S, 1G, 1R, 1B, or. 1K that are drum-shaped.

The surface of the photoconductor 1S in the developing station 18S for S (special color) is uniformly charged by the charging roller as a charging means. The optical writing device 21 irradiates the charged surface of the photoconductor 1S with a laser beam, which is modulated and deflected. As a result, the potential of an irradiated portion (exposed portion) decays. Due to the decay, an electrostatic latent image for S is formed on the surface of the photoconductor 1S. The formed electrostatic latent image for S is developed by the developing device as the developing means into an S toner image.

The S toner image formed on the photoconductor 1S for S is primarily transferred onto an intermediate transfer belt 110. The drum cleaning device removes the primarily-transfer residual toner from the surface of the photoconductor 1S.

In the developing station 18S for S, the photoconductor 1S cleaned by the drum cleaning device is discharged by a discharging device. Further, the photoconductor 1S is uniformly charged by a charging device and thus initialized. The above-described sequence of processes is performed in the same or substantially same manner on the developing stations 18G, 18R, 18B, and 18K for the other colors (G, R, B, K).

The intermediate transfer device 73 includes, for example, the intermediate transfer belt 110 that has an endless loop and a belt cleaner 90. The image forming apparatus 103 further includes, for example, a drive roller 71, a secondary transfer backup roller 72, and five primary transfer bias rollers 62S, 62G, 62R, 62B, and 62K.

The intermediate transfer belt 110 having an endless loop is stretched over multiple tension rollers such as the drive roller 71 disposed inside the loop. The intermediate transfer belt 110 is endlessly moved in the clockwise direction in FIG. 4 by rotation of the drive roller 71 driven by a belt drive motor.

The primary transfer bias rollers 62S, 62G, 62R, 62B, and 62K for S, G, R, B, and K are disposed in contact with the back face (inner circumferential face) of the intermediate transfer belt 110. Primary transfer bias output from a power source is applied to the primary transfer bias rollers 62S, 62G, 62R, 62B, and 62K. Further, the primary transfer bias rollers 62S, 62G, 62R, 62B, and 62K press the intermediate transfer belt 110 against the photoconductors 1S, 1G, 1R, 1B and 1K from the back face of the intermediate transfer belt 110. As a result, primary transfer nips for S, G, R, B, and K are formed at the contact portions between the photoconductors 1S, 1G, 1R, 1B, and 1K and the surface (outer circumferential surface) of the intermediate transfer belt 110. Primary transfer electric fields are formed between the photoconductors 1S, 1G, 1R, 1B, and 1K and the primary transfer bias rollers 62S, 62G, 62R, 62B, and 62K with the effects of primary transfer biases at the primary transfer nips.

The S toner image formed on the photoconductor 1S for S is transferred onto the intermediate transfer belt 110 with the effects of the primary transfer electric field and the nip pressure. The G toner image, the R toner image, the B toner image, and the K toner image formed on the photoconductors 1G, 1R, 1B, and 1K for G, R, B, and K are primarily transferred and sequentially superimposed on the S toner image. A multicolor toner image is formed on the intermediate transfer belt 110 by superimposition in this primary transfer process.

The multicolor toner image formed on the intermediate transfer belt 110 is secondarily transferred onto a recording sheet at a secondary transfer nip described below. The belt cleaner 90 opposed to the drive roller 71 via a belt removes residual toner remaining on the surface of the intermediate transfer belt 110 that has passed through the secondary transfer nip.

In the secondary transfer device 22 disposed below the intermediate transfer device 73, the secondary transfer roller 23 contacts a portion of the intermediate transfer belt 110 wound around the secondary transfer backup roller 72 to form the secondary transfer nip. The secondary transfer backup roller 72 is applied with a secondary transfer bias having the same polarity as the polarity of the toner. By contrast, the secondary transfer roller 23 is grounded. Accordingly, a secondary transfer electric field is formed at the secondary transfer nip to electrostatically move a multicolor toner image on the intermediate transfer belt 110 from the belt toward the secondary transfer roller 23. Timed to coincide with the multicolor toner image on the intermediate transfer belt 110, the registration roller pair 49 forwards the recording sheet to the secondary transfer nip, and the multicolor toner image is secondarily transferred on the recording sheet.

The feeder 200 provided below a housing of the printer 81 includes a feeding cassette 79 and a paper bank 78. The feeding cassette 79 accommodates a stack of multiple recording sheets piled one on another. The feeding cassette 79 and the paper bank 78 press a feeding roller 77 against the uppermost recording sheet of the sheet stack. As the feeding roller 77 rotates, the feeder 200 conveys the uppermost recording sheet to a feeding path 46.

The feeding path 46 that receives a recording sheet fed from the feeding cassette 79 or the paper bank 78 includes multiple conveyance roller pairs 47 and the registration roller pair 49 disposed at an end of the feeding path 46. The conveyance roller pairs 47 convey a recording sheet toward the registration roller pair 49. The recording sheet conveyed toward the registration roller pair 49 is nipped between the rollers of the registration roller pair 49. On the other hand, in the intermediate transfer device 73, the multicolor toner image formed on the intermediate transfer belt 110 is conveyed to the secondary transfer nip as the belt rotates.

The registration roller pair 49 forwards the recording sheet nipped therebetween at a point in time when the recording sheet is brought into close contact with the multicolor toner image at the secondary transfer nip. As a result, at the secondary transfer nip, the multicolor toner image on the intermediate transfer belt 110 is brought into close contact with the recording sheet. The multicolor toner image is secondarily transferred onto the recording sheet, and thus becomes a full-color image on a white recording sheet. The recording sheet on which the full-color image has been formed in this way exits the secondary transfer nip as the secondary transfer roller 23 is driven to rotate, and is then sent to the fixing device 25 via a sheet conveyance unit including a conveyance belt.

The fixing device 25 includes a belt unit that rotates a fixing belt 26 looped around two rollers and a pressure roller 27 pressed against one of the two rollers of the belt unit.

The fixing belt 26 and the pressure roller 27 are in contact with each other, and thus form a fixing nip therebetween. The recording sheet conveyed by the sheet conveyance unit is nipped in the fixing nip. Of the two rollers in the belt unit, the fixing roller pressed by the pressure roller 27 has an internal heat source (heater), and heats the fixing belt 26 with the heat generated by the heat source. The heated fixing belt 26 heats the recording sheet nipped in the fixing nip. With the heat and the nip pressure, the full-color toner image is fixed on the recording sheet.

The recording sheet on which the fixing process is performed by the fixing device 25 is stacked on a stacking portion protruding from a left side plate of a housing of the image forming apparatus 103 or conveyed again to the secondary transfer nip for duplex printing.

To make copies of a bundle of documents, for example, the bundle of documents is placed on a document table 74 of the automatic document feeder 400. When the bundle of documents is bound like a book on one side (side-stitched documents), the bundle is placed on an exposure glass 75. Before the above-described placing of the bundle of documents, the automatic document feeder 400 is opened relative to the main unit of the image forming apparatus 103 to cause the exposure glass 75 of the scanner 300 to be exposed. Subsequently, the side-stitched documents are held by lowering the automatic document feeder 400.

After the documents are placed, the scanner 300 starts a document reading operation in response to pressing of a copy start key. However, when a sheet document is placed on the automatic document feeder 400, the automatic document feeder 400 automatically conveys the sheet document to the exposure glass 75 before the operation of reading the document.

In the operation of reading the document, a first carrier 76 and a second carrier 34 start traveling, and light is emitted from a light source of the first carrier 76. The light is reflected from the surface of the document, and is further reflected by the mirror disposed inside the second carrier 34 to the image forming lens 35. After passing through the imaging forming lens 35, the light enters a reading sensor 36 as incident light. The reading sensor 36 establishes image data according to the incident light.

In parallel with such a document reading operation, components of the developing stations (18S, 18G, 18R, 18B, 18K), the intermediate transfer device 73, the secondary transfer device 22, and the fixing device 25 start operating. According to the image data obtained by the reading sensor 36, the optical writing device 21 is driven, and the S, G, R, B, and K toner images are formed on the photoconductors 1S, 1G, 1R, 1B, and 1K. These toner images are superimposed and transferred onto the intermediate transfer belt 110 to form a multicolor toner image.

Almost simultaneously with the start of the document reading operation, the feeding operation is started in the feeder 200. In the feeding operation, one of the feeding rollers 77 is selectively rotated to feed a recording sheet from the paper bank 78 or the feeding cassette 79. The recording sheets are separated one by one by a separation roller 80 and fed to a reverse feeding path, after which the conveyance roller pairs convey the recording sheet to the secondary transfer nip.

A controller including, for example, a CPU is disposed in the housing of the printer 81 for controlling the devices. Further, a control panel 82 including, for example, a liquid crystal display and various keys or buttons is disposed on the upper surface of the housing. An operator inputs a command on the control panel 82 to transmit the command to the controller. By so doing, the operator can select, for example, a single-sided print mode for forming an image on only one side of the recording sheet or a double-sided print mode for forming images on both sides of the recording sheet. Further, the image forming apparatus 103 displays, for example, a maintenance schedule on the control panel 82.

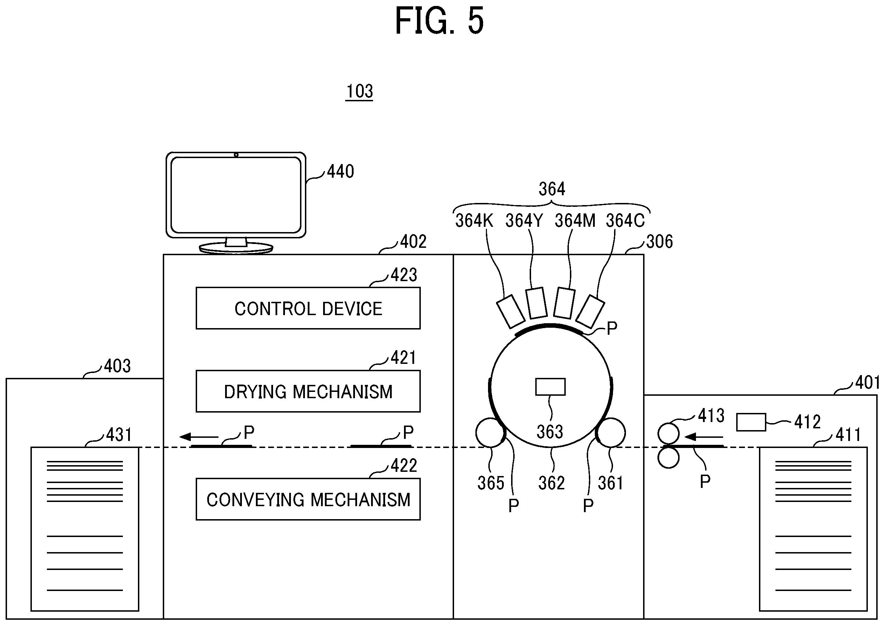

FIG. 5 is a diagram illustrating a modification of the image forming apparatus 103. The image forming apparatus 103 of FIG. 5 is an inkjet image forming apparatus. The image forming apparatus 103 includes a sheet feeding unit 401, an image forming unit 306, a drying unit 402, a sheet ejection unit 403, and a control device 423. In the image forming apparatus 103, the image forming unit 306 forms an image on a sheet P with ink. The sheet P serves as a recording medium as a sheet material fed from the sheet feeding unit 401, according to embodiments of the present disclosure. Ink serves as liquid for image formation according to embodiments of the present disclosure. The image forming apparatus 103 dries the ink adhering to the sheet P in the drying unit 402, and thereafter ejects the sheet P from the sheet ejection unit 403.

The sheet feeding unit 401 includes a sheet feeding tray 411 on which a plurality of sheets P are stacked, a feeding device 412 that separates and feeds the sheets P one by one from the sheet feeding tray 411, and a registration roller pair 413 that feeds the sheets P to the image forming unit 306. The feeding device 412 may be any feeding device such as a device using a roller(s) and a device using air suction. After the leading edge of the sheet P fed from the sheet feeding tray 411 by the feeding device 412 reaches the registration roller pair 413, the registration roller pair 413 is driven at a predetermined point in time to feed the sheet to the image forming unit 306. In the present embodiment, the configuration of the sheet feeding unit 401 is not limited to any particular configuration as long as the sheet feeding unit 401 can feed the sheet P to the image forming unit 306.

The image forming unit 306 includes a sheet receiving cylinder 361, a sheet conveyor drum 362, an ink discharge unit 364, and a sheet transfer cylinder 365. The sheet receiving cylinder 361 receives the fed sheet P. The sheet conveyor drum 362 conveys the sheet P fed from the sheet receiving cylinder 361 while carrying the sheet P on the outer circumferential surface of the sheet conveyor drum 362. The ink discharge unit 364 discharges ink toward the sheet P on the sheet conveyor drum 362. The sheet transfer cylinder 365 transfers the sheet P conveyed from the sheet conveyor drum 362 to the drying unit 402. The leading end of the sheet P conveyed from the sheet feeding unit 401 to the image forming unit 306 is gripped by a sheet gripper disposed on the surface of the sheet receiving cylinder 361. The sheet P is conveyed along with the movement of the surface of the sheet receiving cylinder 361. The sheet P conveyed by the sheet receiving cylinder 361 is delivered to the sheet conveyor drum 362 at a position facing the sheet conveyor drum 362.

A sheet gripper is also disposed on the surface of the sheet conveyor drum 362, and the leading end of the sheet is gripped by the sheet gripper. Multiple suction holes are dispersedly formed on the surface of the sheet conveyor drum 362. A suction device 363 generates a suction airflow toward the inside of the sheet conveyor drum 362 in suction holes. The leading end of the sheet P forwarded from the sheet receiving cylinder 361 to the sheet conveyor drum 362 is gripped by the sheet gripper. The sheet P is attracted to the surface of the sheet conveyor drum 362 by the sucking-in airflow and is conveyed as the sheet conveyor drum 362 rotates.

The ink discharge unit 364 of the present embodiment discharges four color inks of cyan (C), magenta (M), yellow (Y), and black (K), to form an image. The ink discharge unit 364 includes individual liquid discharge heads 364C, 364M, 364Y, and 364K for inks. The configuration of the liquid discharge heads 364C, 364M, 364Y, and 364K is not limited to any particular configuration and may be any configuration that can discharge liquid. The image forming apparatus 103 may include a liquid discharge head that discharges a special ink such as white, gold, or silver as needed. Further, the image forming apparatus 103 may include a liquid discharge head that discharges a liquid that does not contribute to image formation, such as a surface coating liquid.

Discharge operations of the liquid discharge heads 364C, 364M, 364Y, and 364K of the ink discharge unit 364 are controlled by driving signals corresponding to image information. When the sheet P carried on the sheet conveyor drum 362 passes through an area facing the ink discharge unit 364, color inks are discharged from the liquid discharge heads 364C, 364M, 364Y, and 364K to form an image corresponding to the image information. In the present embodiment, the configuration of the image forming unit 306 is not limited to any particular configuration as long as an image is formed by applying liquid onto the sheet P.

The drying unit 402 includes a drying mechanism 421 and a conveying mechanism 422. The drying mechanism 421 dries ink adhering to the sheet P in the image forming unit 306. The conveying mechanism 422 conveys a sheet P conveyed from the image forming unit 306. The sheet P conveyed from the image forming unit 306 is received by the conveying mechanism 422, then conveyed so as to pass through the drying mechanism 421, and delivered to the sheet ejection unit 403. When the sheet P passes through the drying mechanism 421, ink on the sheet P is subjected to a drying process. Accordingly, liquid components such as moisture in the ink are evaporated, the ink adheres to the sheet P, and curling of the sheet P is prevented.

The sheet ejection unit 403 includes a sheet ejection tray 431 on which a plurality of sheets P are stacked. The sheet P conveyed from the drying unit 402 is sequentially stacked and held on the sheet ejection tray 431. In the present embodiment, the configuration of the sheet ejection unit 403 is not limited to any particular configuration and may be any configuration that can eject the sheet P.

The control device 423 is an information processing device that controls the image forming apparatus 103. The control device 423 includes, for example, a CPU, a RAM, a ROM, an SSD (HDD), and a communication device. The control device 423 communicates with the DFE 102 to receive setting values and operation requests according to the execution of a task.

The image forming apparatus 103 includes a display 440 that is built into the image forming apparatus. Alternatively, the display 440 as an external device is attached to the image forming apparatus 103. The image forming apparatus 103 displays, for example, a maintenance schedule on the display 440. The terminal apparatus 101 or the DFE 102 can also display the maintenance schedule.

### Server Apparatus

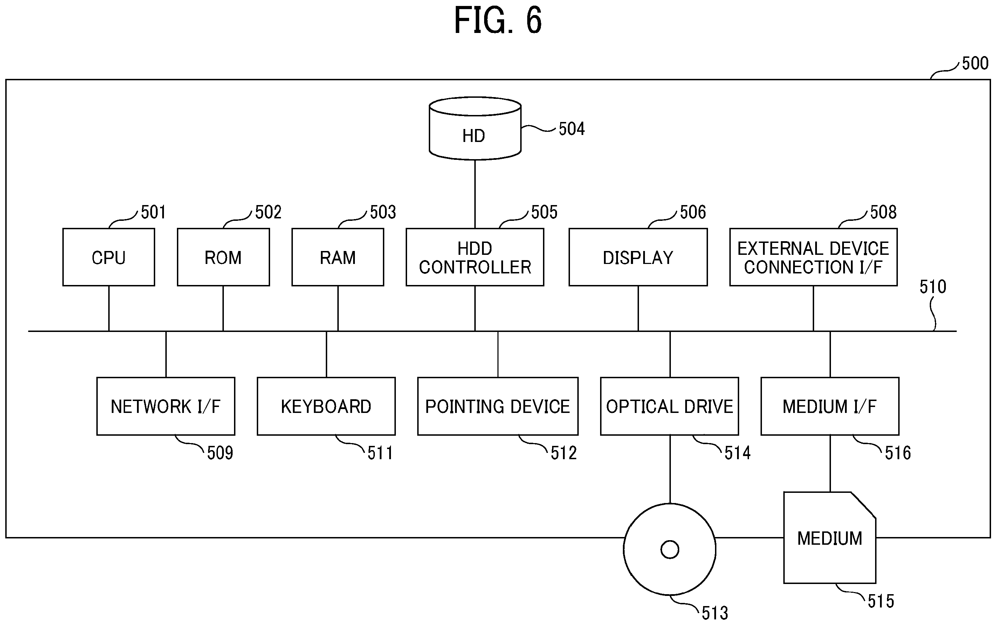

As illustrated in FIG. 6, the server apparatus 104 has a configuration as a computer 500. FIG. 6 is a block diagram illustrating a hardware configuration of the computer 500. As illustrated in FIG. 6, the computer 500 is implemented by a computer. As illustrated in FIG. 6, the computer 500 includes a CPU 501, a ROM 502, a RAM 503, a hard disk (HD) 504, an HDD controller 505, a display 506, an external device connection I/F 508, a network I/F 509, a bus line 510, a keyboard 511, a pointing device 512, an optical drive 514, and a medium I/F 516.

The CPU 501 controls the overall operation of the computer 500. The ROM 502 stores programs such as an initial program loader (IPL) to boot the CPU 501. The RAM 503 is used as a work area for the CPU 501. The HD 504 stores various data such as a program. The HDD controller 505 controls the reading and writing of various data from and to the HD 504 under the control of the CPU 501. The display 506 displays various kinds of information such as a cursor, a menu, a window, a character, or an image. The external device connection I/F 508 is an interface that connects the computer 500 to various external devices. Examples of the external devices include, but are not limited to, a universal serial bus (USB) memory and various printers. The network I/F 509 is an interface that controls the communication of data with an external device through a communication network. The bus line 510 is, for example, an address bus or a data bus, which electrically connects the components such as the CPU 501 illustrated in FIG. 6.

Further, the keyboard 511 serves as an input means including a plurality of keys to be used for inputting, for example, characters, numerical values, and various instructions according to embodiments of the present disclosure. The pointing device 512 serves as an input means to be used for, for example, selecting or executing various kinds of instructions, selecting a target for processing, or moving a cursor being displayed according to embodiments of the present disclosure. The optical drive 514 controls the reading or writing of various data from or to an optical storage medium 513, which serves as a removable storage medium according to embodiments of the present disclosure. Examples of the optical storage medium 513 include, but are not limited to, a compact disc (CD), a digital versatile disc (DVD), and a Blu-ray^{®} disc. The medium I/F 516 controls the reading or writing (storing) of data from or to a storage medium 515 such as a flash memory.

### Functions

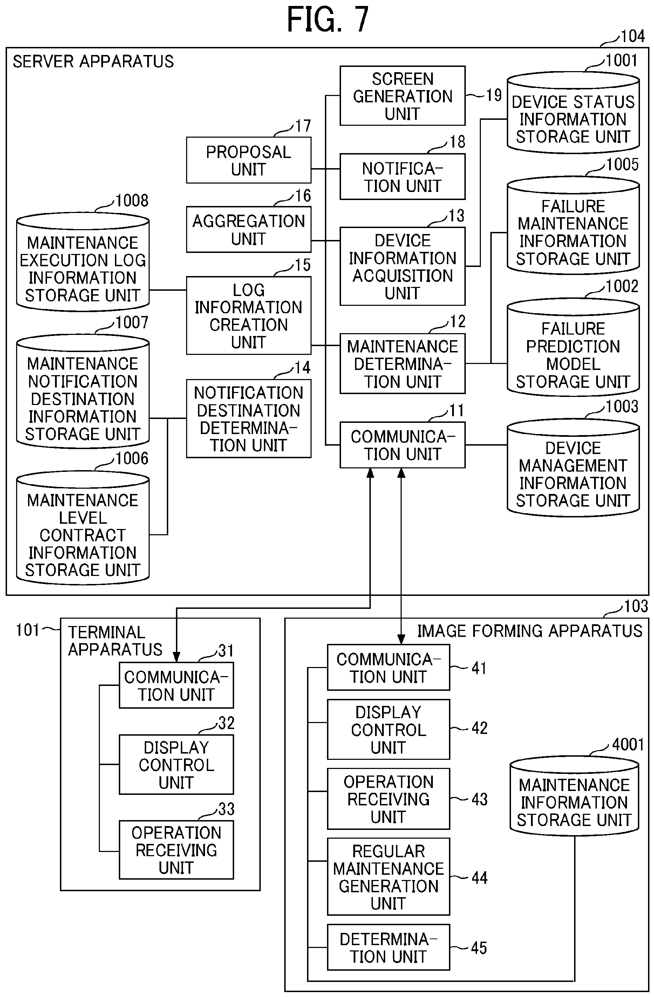

Functions of the apparatuses that the service management system 100 includes are described below with reference to, for example, FIG. 7. FIG. 7 is a block diagram illustrating functional configurations of the server apparatus 104, the terminal apparatus 101, and the image forming apparatus 103 that the service management system 100 includes. The service management system 100 does not necessarily have to include the terminal apparatus 101. The service management system 100 is implemented provided that it includes the server apparatus 104 and the image forming apparatus 103.

### Server Apparatus

The server apparatus 104 includes a communication unit 11, a maintenance determination unit 12, a device information acquisition unit 13, a notification destination determination unit 14, a log information creation unit 15, an aggregation unit 16, a proposal unit 17, a notification unit 18, and a screen generation unit 19. The functions of the server apparatus 104 are functions or means implemented as the CPU 501 illustrated in FIG. 6 executes instructions included in one or more programs installed on the server apparatus 104.

The server apparatus 104 further includes a device status information storage unit 1001, a failure prediction model storage unit 1002, a device management information storage unit 1003, a failure maintenance information storage unit 1005, a maintenance level contract information storage unit 1006, a maintenance notification destination information storage unit 1007, and a maintenance execution log information storage unit 1008. Each of the above-mentioned storage units is implementable by, for example, the HD 504 or the RAM 503 illustrated in FIG. 6.

The communication unit 11 receives device status information described below from the image forming apparatus 103. When the maintenance determination unit 12 detects a sign of failure, the communication unit 11 transmits additional maintenance information to the image forming apparatus 103 or a customer engineer determined by the notification destination determination unit 14. Further, the communication unit 11 may transmit a notification of the occurrence of the additional maintenance to the administrator of the device by referring to device management information stored in the device management information storage unit 1003.

The device information acquisition unit 13 acquires the device status information from the image forming apparatus 103 via the communication unit 11, and stores the device status information in the device status information storage unit 1001. The device status information indicates an in-use condition of the image forming apparatus 103. The device status information is information including a measurement value obtained by measuring, for example, current, voltage, or temperature of the components of the image forming apparatus 103 with various sensors and a counter value indicating the number of times print data is printed on a sheet by the image forming apparatus 103.

The maintenance determination unit 12 detects a sign of failure occurring in the image forming apparatus 103 on the basis of the device status information acquired by the device information acquisition unit 13 and a failure prediction model stored in the failure prediction model storage unit 1002 described below. The sign of the failure indicates what kind of failure (type of failure) is expected to occur in the image forming apparatus 103. The sign of failure may further include, for example, a probability of occurrence of failure, a time period until the occurrence of failure, and the severity of failure that is expected to occur.

Further, the maintenance determination unit 12 identifies additional maintenance to be performed from failure types stored in the failure maintenance information storage unit 1005 according to the type of the failure for which the sign is detected.

The notification destination determination unit 14 determines which of the customer engineer or the user (enterprise customer) the notification is to be transmitted when additional maintenance occurs. The user (enterprise customer) is the image forming apparatus 103 in which the failure has occurred. A detailed description is given later.

The log information creation unit 15 creates a maintenance execution log regarding the regular maintenance and the additional maintenance. The additional maintenance may be referred to as "accelerated maintenance." When regular maintenance that is the same as or similar to the additional maintenance is present within a predetermined number of days from the recommended start date of the additional maintenance, such regular maintenance is referred to as the accelerated maintenance. "The same or similar" refers to that the target modules are the same or parts of the target modules are common. For this reason, maintenance performed in the accelerated maintenance can be either the regular maintenance or the additional maintenance.

The aggregation unit 16 aggregates a maintenance execution rate on the basis of a maintenance execution log. The aggregation can be performed, for example, for work skill levels, for image forming apparatuses 103, for users (enterprise customers), for types of the regular maintenance, or for types of additional maintenances.

The proposal unit 17 proposes a change in a user maintenance level when the execution rate of the additional maintenance is less than a threshold value. In other words, when the maintenance level of the user (enterprise customer) is high, the additional maintenance to be performed by the user (enterprise customer) increases. By contrast, when the execution rate is low, the proposal unit 17 estimates that the maintenance skill is insufficient, and proposes that the maintenance level is to be lowered.

When additional maintenance occurs, the notification unit 18 notifies one of the customer engineer and the image forming apparatus 103 (user) in which a failure has occurred, which is the notification destination determined by the notification destination determination unit 14, of the occurrence of the additional maintenance via the communication unit 11.

The screen generation unit 19 generates screen information of a screen to be displayed on a display directly connected to the terminal apparatus 101, the image forming apparatus 103, or the server apparatus 104. The screen generation unit 19 generates the screen information for displaying the execution rate by, for example, HTML, XML, JavaScript^{®}, or CSS. The web browser of the terminal apparatus 101 or the image forming apparatus 103 receives the screen information and displays various screens described below by analyzing the received screen information. Such an application executed by the cooperation between the server function of the server apparatus 104 and the web browser is referred to as a "web application."

Alternatively, the terminal apparatus 101 or the image forming apparatus 103 may execute a native application. In this case, since the native application has the configuration of the screen, the screen information may be content displayed by the native application.

### Device Status Information Storage Unit 1001

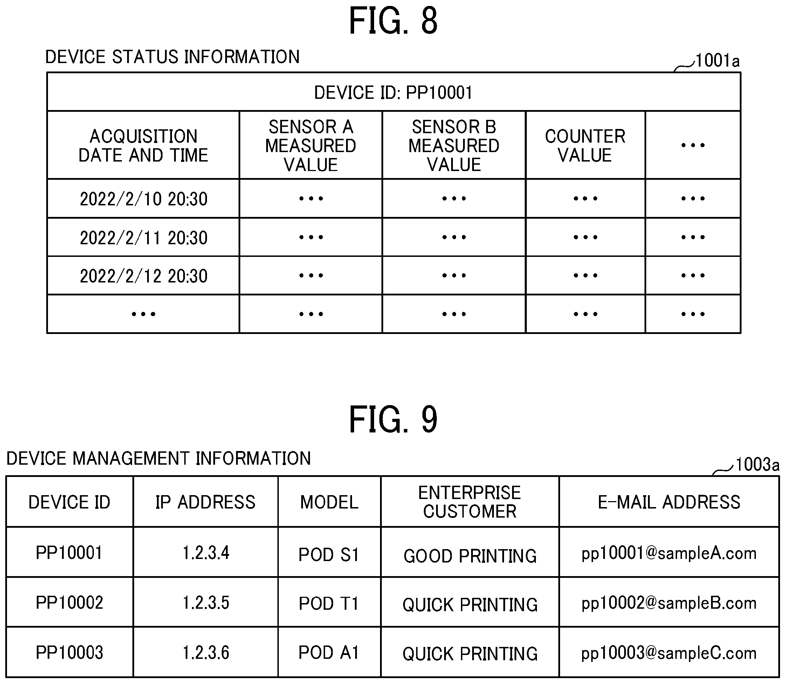

FIG. 8 is a table of device status information 1001a stored in the device status information storage unit 1001, according to an embodiment of the present disclosure. As illustrated in FIG. 8, the device status information storage unit 1001 stores, for example, acquisition date and time, a sensor A measured value, a sensor B measured value, and a counter value in association with a device ID that uniquely identifies the image forming apparatus 103. In addition to the device status information 1001a of the device ID "PP10001" illustrated in the figure, the device status information 1001a of other devices is also stored in the device status information storage unit 1001. The device status information 1001a indicates a record of measured values and counter values in the image forming apparatus 103 for predetermined times.

The acquisition date and time indicate a date and time when the image forming apparatus 103 transmits the device status information 1001a to the server apparatus 104. In the present embodiment described with reference to FIG. 8, the device status information 1001a is transmitted every day at 20:30. However, such a time of transmission is merely given by way of example. In an alternative embodiment of the present disclosure, the device status information 1001a may be transmitted at irregular intervals or multiple times a day.

The sensor A measured value and the sensor B measured value are measured values obtained by measuring, for example, currents, voltages, and temperatures of components of the image forming apparatus 103 by various sensors. Three or more sensor measured values are often obtained.

The counter value indicates an accumulated value of the number of pages printed by the image forming apparatus 103.

The maintenance determination unit 12 predicts the occurrence of a failure in the image forming apparatus 103 on the basis of the device status information 1001a and the failure prediction model stored in the failure prediction model storage unit 1002.

### Failure Prediction Model Storage Unit 1002

The failure prediction model is data obtained by modeling, for example, conditions of the measured values or the counter values when a failure occurs. Multiple failure prediction models exist for multiple types of failure (failure types) respectively. Multiple failure prediction models may be further prepared for multiple device types respectively.

For example, the failure prediction model storage unit 1002 stores a failure prediction model A for predicting the occurrence of failure A, a failure prediction model B for predicting the occurrence of failure B, and a failure prediction model C for predicting the occurrence of a failure C. The failure prediction model is information that associates the device status information 1001a with, for example, a probability of occurrence of a failure, a time period until a failure occurs, and the severity of a failure that is expected to occur. Such information may be manually created in advance by, for example, the administrator on the basis of past findings. Alternatively, such information may be created by machine learning.

Machine learning is a technique for causing a computer to acquire human-like learning capability, and refers to a technique in which a computer autonomously generates an algorithm required for e.g., determination of data identification from learning data acquired in advance, and applies the algorithm to new data to perform prediction. Any suitable learning method may be applied to machine learning.For example, any one of supervised learning, unsupervised learning, semi-supervised learning, reinforcement learning, and deep learning, or a combination of two or more those learning may be applied to machine learning. Machine learning methods include, for example, perceptron, deep learning, support-vector machine, logistic regression, naive Bayes, decision tree, and random forests, and are not limited the techniques described in the present embodiment.

For example, in a failure prediction model using deep learning as one of machine learning, the administrator prepares a set of e.g., device status information 1001a, a failure that has occurred, a time until the failure occurs, and severity as training data. A given information processing apparatus learns how to deal with the failure, with e.g., inputs of the device status information 1001a, the failure that has occurred, the time until the failure occurrence, and the severity as training data. Alternatively, in a failure prediction model using multiple regression as one of machine learning, a person in charge associates the device status information 1001a as an explanatory variable with the failure that has occurred as an objective variable using a polynomial. In substantially the same manner, the person in charge associates the device status information 1001a with the time until the failure occurs using a polynomial, and associates the device status information 1001a with the severity using a polynomial. The coefficients of the polynomial are determined so that the difference between the objective variables and the values output by the polynomial is minimized (multiple regression analysis).

The prediction of failure is described with reference to the device status information 1001a of FIG. 8. For example, when the device status information 1001a of the device ID "PP10001" is acquired, the maintenance determination unit 12 predicts an occurrence of the failure A (detects a sign) on the basis of the device status information 1001a and the failure prediction model A for predicting the occurrence of the failure A. In substantially the same manner, the maintenance determination unit 12 predicts an occurrence of the failure B (detects a sign) on the basis of the device status information 1001a and the failure prediction model B for predicting the occurrence of the failure B. Other failures are predicted in substantially the same manner. As described, the maintenance determination unit 12 predicts the occurrence of e.g., the failures A to C corresponding to the failure prediction models for the failures A to C stored in the failure prediction model storage unit 1002.

Device Management Information Storage Unit 1003

FIG. 9 is a table of device management information 1003a stored in the device management information storage unit 1003, according to an embodiment of the present disclosure. As illustrated in FIG. 9, items of a device ID, an internet protocol (IP) address, a model, an enterprise customer, and an e-mail address are registered in the device management information storage unit 1003.

The item "device ID" is identification information for identifying the image forming apparatus 103. The image forming apparatus 103 identified by the device ID is a device to which a service is to be provided (i.e., a service target device).

The item "IP address" is an IP address of the image forming apparatus 103. The server apparatus 104 can transmit, for example, additional maintenance information to the IP address as a destination.

The item "model" is a type of the image forming apparatus 103, and specifically, includes, for example, a model code, a model number, or a machine number.

In the item "enterprise customer," the name or the ID of a company contracting for the maintenance service of the image forming apparatus 103 is stored. In the present embodiment, the enterprise customer includes an enterprise that contracts for the operator maintenance and an enterprise that does not contract for the operator maintenance.

The e-mail address is an e-mail address of, for example, the administrator of the image forming apparatus 103 and the customer engineer in charge. The server apparatus 104 can transmit, for example, a notification indicating that additional maintenance is set to the e-mail address as a destination, By the transmission of an e-mail notifying the customer engineer of the additional maintenance, the notification destination determined by the notification destination determination unit 14 is notified of the additional maintenance.

### Failure Maintenance Information Storage Unit 1005

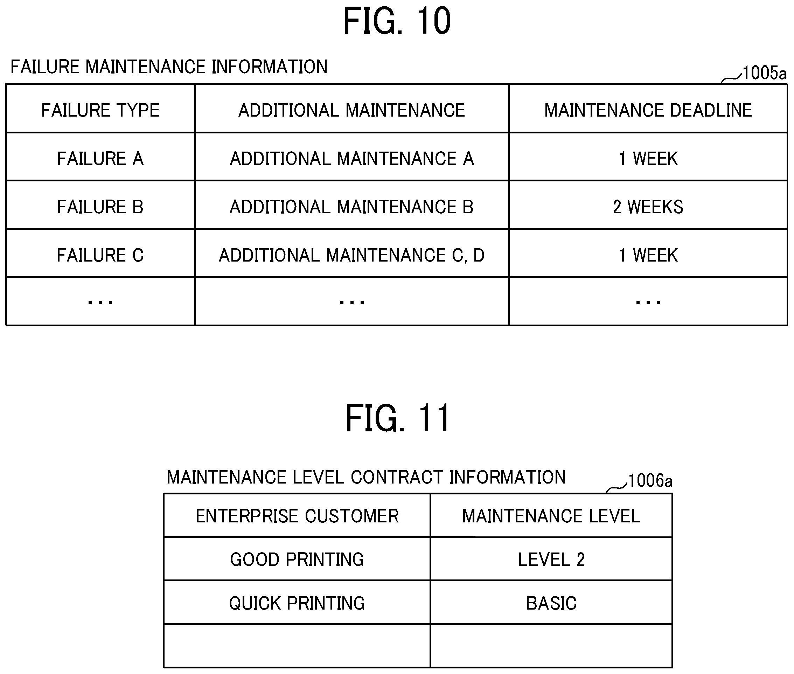

FIG. 10 is a table of failure maintenance information 1005a stored in the failure maintenance information storage unit 1005 according to an embodiment of the present disclosure. As illustrated in FIG. 10, in the failure maintenance information storage unit 1005, items of additional maintenance and a maintenance deadline are registered in association with a failure type. The failure maintenance information 1005a may be different for device models or may be common to device models.

The item "failure type" indicates what kind of sign of failure is detected by the maintenance determination unit 12.

The item "additional maintenance" is a content of additional maintenance required for maintenance for the failure for which the sign is detected. The content of the additional maintenance includes the target module.

The item "maintenance deadline" indicates by when the additional maintenance is to be performed. The maintenance deadline is set to a time period starting from the date of diagnosis by the maintenance determination unit 12. It is not that the failure occurs immediately after the expiration of the maintenance deadline. There is a risk that the possibility of failure gradually increases after the expiration of the maintenance deadline.

### Maintenance Level Contract Information Storage Unit 1006

FIG. 11 is a table of the maintenance level contract information 1006a stored in the maintenance level contract information storage unit 1006 according to an embodiment of the present disclosure. The maintenance level of an enterprise customer for the maintenance service is registered in the maintenance level contract information 1006a. The maintenance level of the enterprise customer for the maintenance service serves as first service level information according to an embodiment of the present disclosure. The maintenance level is determined in, for example, a contract that specifies the difficulty level of maintenance to be performed by an operator in the operator maintenance. The higher the difficulty level of the maintenance to be performed by the operator in the contract, the lower the maintenance fee. The maintenance level includes levels 1 to 3 and "basic." The level is higher in the order of the level 3, the level 2, and the level 1. The higher the level of the contract, the more advanced maintenance the enterprise customer has to perform. The "basic" indicates that the operator maintenance contract is not concluded. When the maintenance level is basic, the customer engineer performs all types of additional maintenance. In the present embodiment, the description given above is of a case where the maintenance level includes three levels. Alternatively, the maintenance level may include two levels or four or more levels.

In FIG. 11, the maintenance level is associated with the enterprise customer. Alternatively or in addition, the maintenance level may be associated with a device, a user (individual operator) of the device, or a user group.

### Maintenance Notification Destination Information Storage Unit 1007

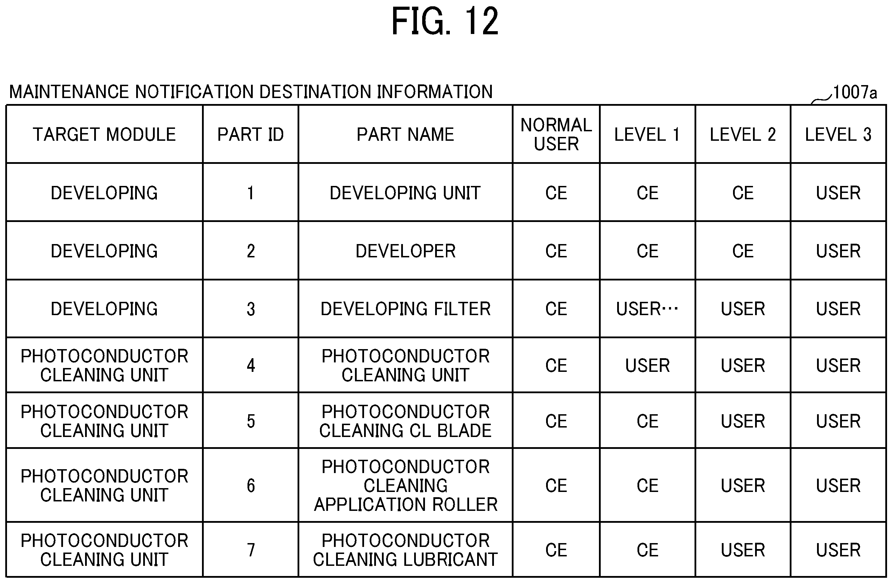

FIG. 12 is a table of the maintenance notification destination information 1007a stored in the maintenance notification destination information storage unit 1007 according to an embodiment of the present disclosure. The maintenance notification destination information 1007a is information for determining to which of the customer engineer or a user of the customer (enterprise customer) the server apparatus 105 sends the notification of additional maintenance of a target module according to the maintenance level. As illustrated in FIG. 12, in the maintenance notification destination information storage unit 1007, items of a target module, a part ID, a part name, a normal user, and the levels 1 to 3 are registered.

In the item of the target module, a module on which additional maintenance that occurs is to be performed is registered. The "module" refers to something that provides a certain function by one or more parts (components).

In the item of the part ID, identification information for identifying parts of the target module is registered.

In the item of the part name, general names of the parts of the target module are registered.

In the item of the normal user, information indicating that the customer engineer is a notification destination in the case of a company that does not conclude a contract for the operator maintenance.

The items of the levels 1 to 3 indicate the work skill level (i.e., the difficulty level of an operation) of the target module. Such a difficulty level of the target module serves as second service level information according to an embodiment of the present disclosure. In other words, in the items of the levels 1 to 3, information indicating which of the customer engineer (CE) and the user (enterprise customer) is the notification destination in association with the levels 1 to 3 of the maintenance level contract information 1006a is registered. For example, in a case where the target module is "Development" and the part ID is "1," when the maintenance level of the enterprise customer is the level 1 or the level 2, information indicating that a customer engineer performs the maintenance work. When the maintenance level of the enterprise customer is level 3, information indicating that a user (operator) of the enterprise customer performs the maintenance work. The customer engineer may refer to an individual. More specifically, the customer engineer may be interpreted as a service provider (company) of maintenance services.

In other words, the work skill level of the target module is determined on the basis of the level at which "USER" is furthest to the left in the table of FIG. 12 among the levels 1 to 3. For example, in a case where the part ID is "1," the work skill level is the level 3. In a case where the part ID is "3," the work skill level is 1. The work skill level is the level of maintenance that a user can handle in order to perform maintenance work on the target module.

### Maintenance Execution Log Information Storage Unit 1008

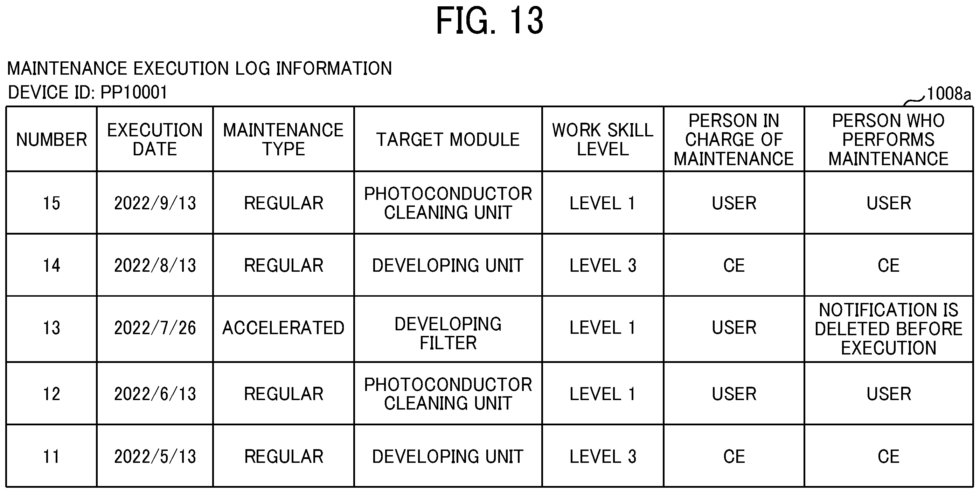

FIG. 13 is a table of maintenance execution log information 1008a stored in the maintenance execution log information storage unit 1008 according to an embodiment of the present disclosure. The maintenance execution log information 1008a is log information relating to past maintenance execution. The maintenance execution log information 1008a serves as service execution log information according to an embodiment of the present disclosure. The maintenance execution log information 1008a includes execution logs of regular maintenance in addition to additional maintenance. The execution logs are received by the server apparatus 104 from the image forming apparatus 103. Further, maintenance that has not been performed is also registered in the maintenance execution log information 1008a. Among the additional maintenance, for the maintenance for which determination is made that the accelerated execution is recommended, "accelerated" is written. Accordingly, the execution logs of the regular maintenance, the additional maintenance, and the accelerated maintenance are stored in the maintenance execution log information storage unit 1008.

As illustrated in FIG. 13, in the maintenance execution log information storage unit 1008, the items of an execution date, a maintenance type, the target module, the work skill level, a person in charge of maintenance, and a person who performs maintenance are registered.

In the item of the number, identification information for identifying the execution log is recorded.

In the item of the date of maintenance, the date on which the maintenance is performed is stored.

In the item of the maintenance type, the regular maintenance, the additional maintenance, or the accelerated maintenance is stored.

The target module is a module on which the maintenance has been performed (or is scheduled to be performed).

The work skill level includes the level 1 to 3 or "basic" associated with the target module by the maintenance notification destination information storage unit 1007.

In the item of the person in charge of maintenance, one of the customer engineer and the user (enterprise customer), which is determined by the notification destination determination unit 14, is registered.

In the item of the person who performs maintenance, the customer engineer or the user (enterprise customer) who has actually performed the maintenance is registered. The person or entity who (which) has actually performed maintenance is identified by the login to the image forming apparatus 103 at the time of maintenance.

### Terminal Apparatus

Referring again to FIG. 7, a functional configuration of the terminal apparatus 101 is described. The terminal apparatus 101 includes a communication unit 31, a display control unit 32, and an operation receiving unit 33. The functions of the terminal apparatus 101 are functions or means implemented by a web browser executing JavaScript^{®} included in screen information and cooperating with the web application of the server apparatus 104.

The communication unit 31 typically communicates with the server apparatus 104, receives screen information of the maintenance schedule screen from the server apparatus 104, and transmits information entered by the administrator to, for example, the maintenance schedule screen to the server apparatus 104.

The display control unit 32 analyzes the screen information transmitted from the server apparatus 104 and displays, for example, the maintenance schedule screen described below on the display 440.

The operation receiving unit 33 receives an operation and input to the maintenance schedule screen by the administrator or a general user.

### Image Forming Apparatus

A functional configuration of the image forming apparatus 103 is described below. The image forming apparatus 103 includes a communication unit 41, a display control unit 42, an operation receiving unit 43, a regular maintenance generation unit 44, and a determination unit 45. The functionals of the image forming apparatus 103 are functions or means implemented as a CPU of the control panel 82 or the CPU of the control device 423 executes instructions included in one or more programs installed on the image forming apparatus 103.

The image forming apparatus 103 further includes a maintenance information storage unit 4001. The storage units described above can be implemented by, for example, the HDD or the SSD of the control panel 82 or the control device 423.

The communication unit 41 communicates with the communication unit 11 of the server apparatus 104. The communication unit 41 is implemented by, for example, a communication interface that performs communication using transmission control protocol/internet protocol (TCP/IP), such as a network card, or a communication program that controls communication with a USB cable. The communication unit 41 transmits the device status information 1001a to the server apparatus 104, receives the additional maintenance information, and stores the received information in the maintenance information storage unit 4001.

The display control unit 42 displays the scheduled date of regular maintenance stored in maintenance information storage unit 4001 on the maintenance schedule screen. On the maintenance schedule screen, the schedule of maintenance is displayed on a calendar. The display control unit 42 further displays an accelerated execution proposal screen that recommends the accelerated execution of the regular maintenance and a maintenance execution rate screen. The screens are provided from the server apparatus 104.

The operation receiving unit 43 receives an operation and input to, for example, the maintenance schedule screen or the accelerated execution proposal screen by a user.

The regular maintenance generation unit 44 determines whether to perform regular maintenance. When the determination result indicates that regular maintenance is to be performed, the regular maintenance generation unit 44 stores regular maintenance information in the maintenance information storage unit 4001. The regular maintenance generation unit 44 determines, based on, for example, the counter value, that regular maintenance is to be performed at intervals of a counter value indicating a certain number of printed pages. The regular maintenance generation unit 44 determines that the regular maintenance determined in accordance with the counter value is to be performed. Since a regular maintenance workload is low and the working time involved in regular maintenance is short, the regular maintenance generation unit 44 allocates several hours, on an hourly basis, or one day, on a daily basis, for the regular maintenance in the schedule.

In response to receipt of the additional maintenance information from the server apparatus 104, the determination unit 45 determines whether to recommend an accelerated execution of the regular maintenance. A detailed description is given later.

### Maintenance Information Storage Unit 4001

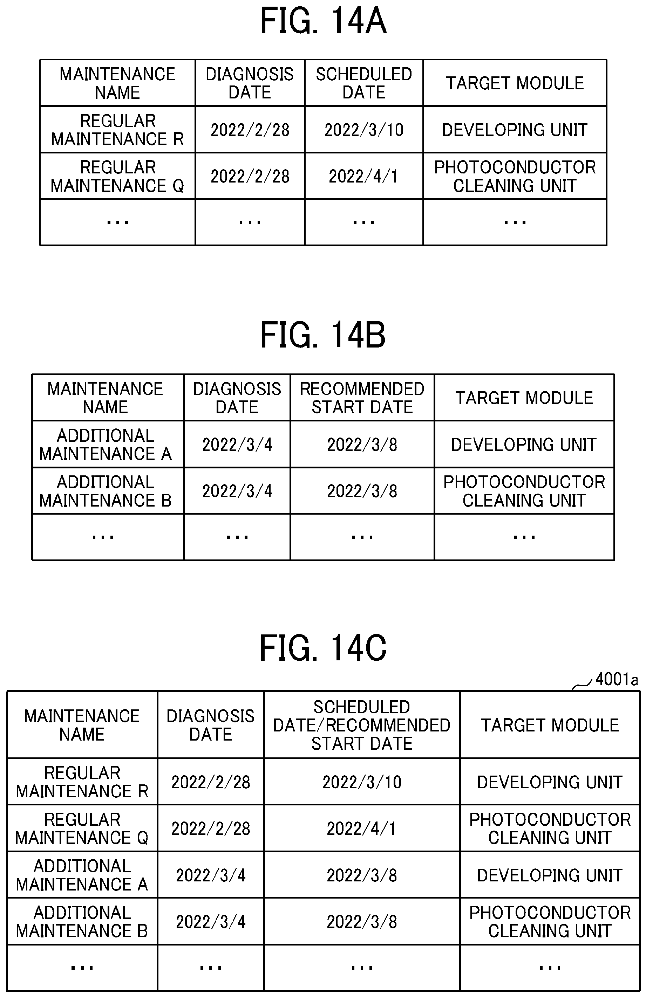

A description is now given of maintenance information with reference to FIG. 14A to FIG. 14C. The maintenance information stored in the image forming apparatus 103 includes the additional maintenance information transmitted from the server apparatus 104 and the regular maintenance information generated by the image forming apparatus 103. The regular maintenance information and the additional maintenance information are now described.

FIG. 14A is a table of the regular maintenance information generated by the regular maintenance generation unit 44 according to an embodiment of the present disclosure. As illustrated in FIG. 14A, regular maintenance schedules generated by the image forming apparatus 103 are registered in chronological order. The regular maintenance information includes items "maintenance name," "date of diagnosis," "scheduled date," and "target module."

The item "maintenance name" is the name of regular maintenance determined by the regular maintenance generation unit 44 in accordance with the counter value.

The item "date of diagnosis" is the date on which the regular maintenance generation unit 44 determines that regular maintenance is to be performed. The date of diagnosis may be a predetermined time, for example, every other week or every other Monday. The above is merely one example of the frequency of diagnosis, and the diagnosis can be performed at any suitable intervals. Further, the frequency of diagnosis may vary depending on the type of maintenance, or parts, portions, or components to be diagnosed.

The item "scheduled date" is a date on which or a period within which the regular maintenance is to be performed, and the date or period is determined by the regular maintenance generation unit 44. The date on which the regular maintenance is to be performed is, for example, a date on which the counter value is expected to reach a certain value.

The item "target module" is a module or an object to be subjected to the regular maintenance.

FIG. 14B is a table of the additional maintenance information relating to additional maintenance transmitted by the server apparatus 104. The additional maintenance information includes items "maintenance name," "date of diagnosis," "recommended start date," and "target module." The item "maintenance name" may be the same or substantially the same as that in FIG. 14A.

The "date of diagnosis" is the date on which the maintenance determination unit 12 detects a sign of failure. The date of diagnosis is transmitted from the server apparatus 104.

The item "recommended start date" is a start time at which the execution of additional maintenance is recommended. For example, the recommended start date may be any date within a period of time from the following date of the date of diagnosis to the date determined by adding the maintenance deadline in the failure maintenance information 1005a to the date of diagnosis. The recommended start date is transmitted from the server apparatus 104.

The item "target module" is a module to be subjected to the additional maintenance. The target module is included in the item "additional maintenance" in the failure maintenance information storage unit 1005.

### The target module is transmitted from the server apparatus 104.

Accordingly, maintenance information 4001a that is obtained by integrating the regular maintenance information of FIG. 14A and the additional maintenance information of FIG. 14B is stored in the maintenance information storage unit 4001 of the image forming apparatus. FIG. 14 is a table of the maintenance information 4001a stored in the maintenance information storage unit 4001 according to an embodiment of the present disclosure. The maintenance information includes items "maintenance name," "date of diagnosis," and "target module," which correspond to those in FIG. 14A or 14B. In other words, the items "maintenance name," "date of diagnosis," and "target module" are the same as the items "maintenance name," "date of diagnosis," and "target module" in the regular maintenance information illustrated in FIG. 114 or the additional maintenance information illustrated in FIG. 14B, respectively. The maintenance information further includes an item "scheduled date/recommended start date," which corresponds to the item "scheduled date" in FIG. 14A or the item "recommended start date" in FIG. 14B.

### Determination of Notification Destination

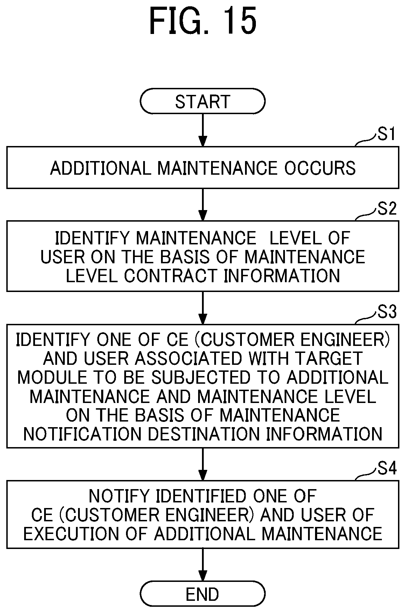

FIG. 15 is a flowchart of a process in which the notification destination determination unit 14 determines a notification destination to which the execution of additional maintenance is notified.

As indicated in step S1, the process of FIG. 15 is performed when additional maintenance based on failure prediction occurs (S1).

When the additional maintenance based on the failure prediction occurs, the notification destination determination unit 14 identifies a maintenance level of a user (enterprise customer) on the basis of the maintenance level contract information 1006a (S2). In this step, the user is identified by searching the device management information storage unit 1003 on the basis of the image forming apparatus 103 that transmitted the device management information.

Subsequently, the notification destination determination unit 14 identifies one of a customer engineer and the user (enterprise customer) associated with the target module of the additional maintenance and the maintenance level on the basis of the maintenance notification destination information 1007a (S3). In other words, when the maintenance level of the user (enterprise customer) is equal to or higher than the work skill level, the notification destination determination unit 14 determines the user (enterprise customer) as the notification destination. By contrast, when the maintenance level of the user is lower than the work skill level, the notification destination determination unit 14 determines the service provider of the maintenance service as the notification destination.

In the additional maintenance detected on the basis of the failure prediction, a module to be subjected to maintenance is determined. On the other hand, in the maintenance notification destination information 1007a, the notification destinations are registered in association with parts. For this reason, the notification destination determination unit 14 determines the highest work skill level among the parts of the target module in the maintenance notification destination information 1007a as the work skill level of the target module.

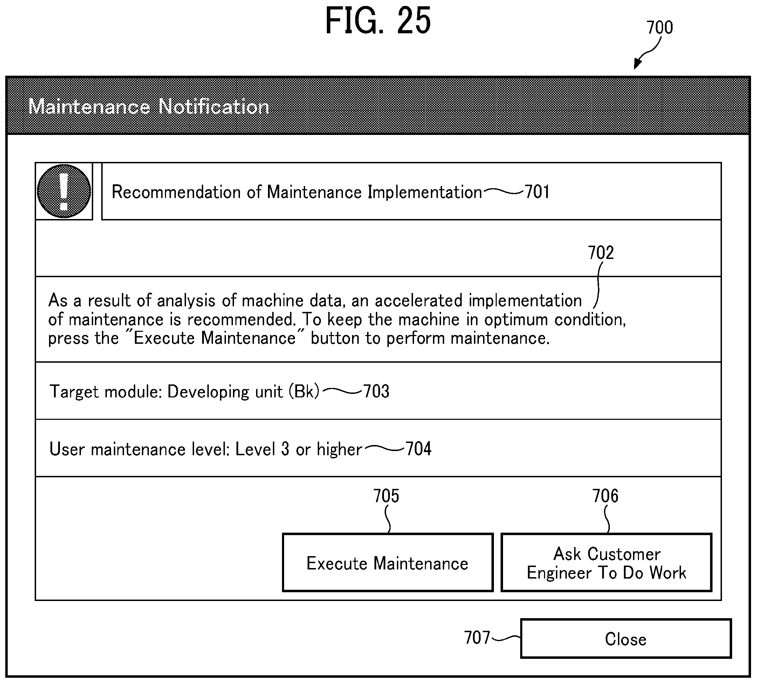

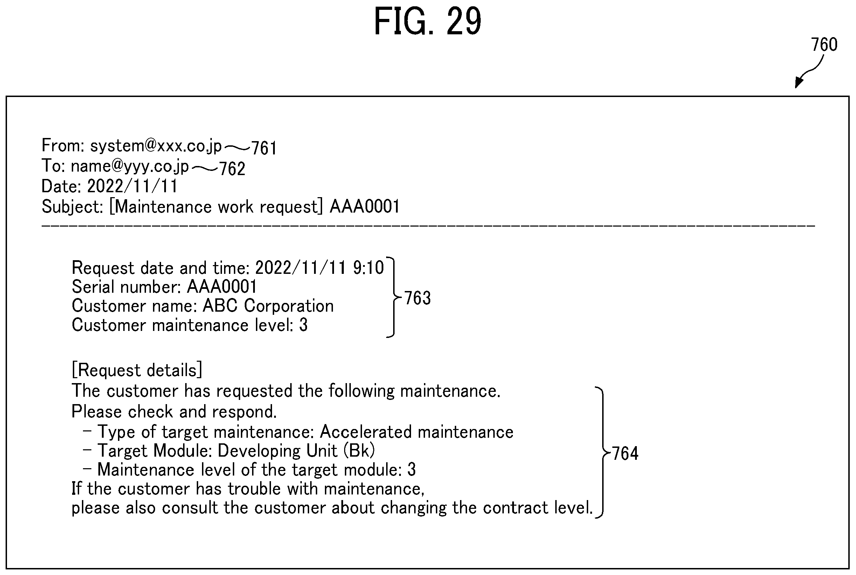

The notification unit 18 notifies one of the customer engineer or the user (enterprise customer) identified as the notification destination of the execution of the additional maintenance via the communication unit 11 (S4). Notifying the customer engineer means that the notification unit 18 transmits an e-mail to the customer engineer in charge (see FIG. 29). Alternatively, the notification unit 18 may notify a support center of the occurrence of the additional maintenance with the designation of the name of the enterprise customer or the device ID. Notifying the user (enterprise customer) means that the image forming apparatus 103 or the administrator is notified of the occurrence of the additional maintenance with the designation of the device ID (see FIG. 25).

Thus, in a case where the operator maintenance contract is concluded, an appropriate notification destination (a customer engineer or an enterprise customer) is notified of the execution of additional maintenance on the basis of the device status.

### Display of Maintenance Execution Log

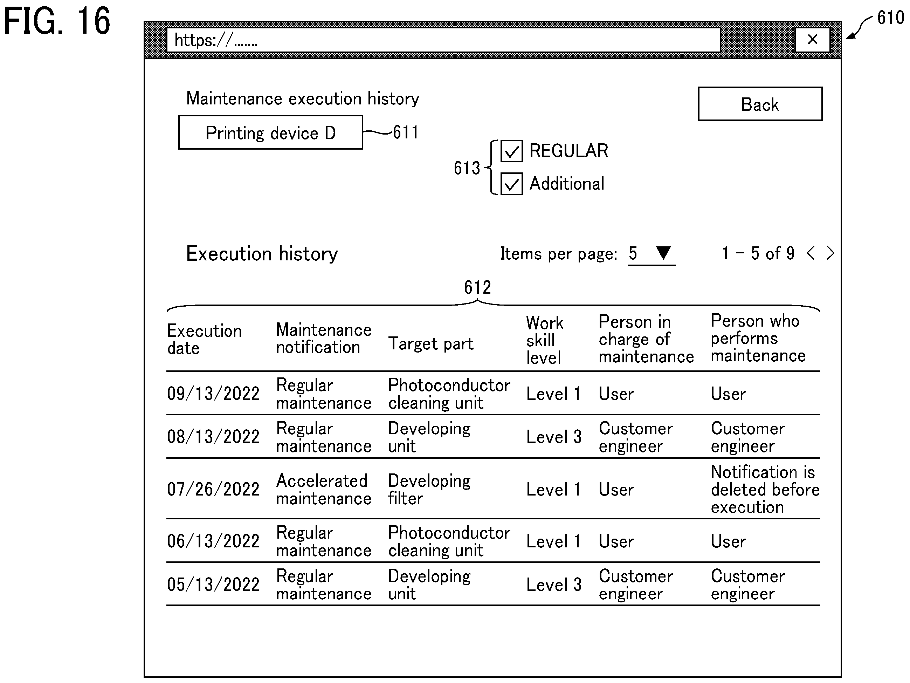

A description is now given of the display of the maintenance execution log with reference to FIG. 16. FIG. 16 illustrates a maintenance execution log screen 610 according to an embodiment of the present disclosure. The maintenance execution log screen 610 may be displayed by any one of the server apparatus 104, the terminal apparatus 101, and the image forming apparatus 103. The terminal apparatus 101 may be operated by the customer engineer or the user. Regarding other screens described below, also, the terminal apparatus 101 may be operated by the customer engineer or the user. The maintenance execution log screen 610 can be displayed for respective image forming apparatuses 103. Device information 611 indicating the image forming apparatus 103 for which the maintenance execution log screen 610 is currently being displayed is displayed.

Further, the maintenance execution log screen 610 can selectively display the execution log of only the regular maintenance, the execution log of only the additional maintenance, or the execution logs of both of the regular maintenance and the additional maintenance. The user can switch the type of maintenance for which the execution log is to be displayed by ticking a switching check box 613. This switching can be performed in the same or substantially the same manner on a maintenance execution rate screen described below.

The screen generation unit 19 processes information acquired from the maintenance execution log information storage unit 1008 to create the maintenance execution log screen 610. Accordingly, the maintenance execution log screen 610 displays a maintenance execution log 612 including items of an execution date, a maintenance type, a target module, a work skill level, a person in charge of maintenance, a person who performs maintenance, and maintenance execution, which are the items included in the maintenance execution log information storage unit 1008.

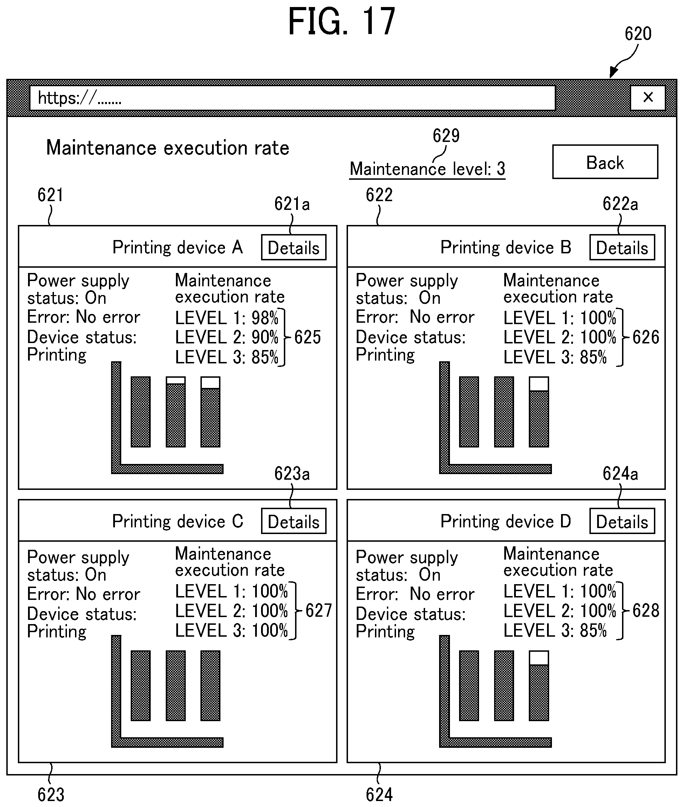

FIG. 17 illustrates a maintenance execution rate screen 620 according to an embodiment of the present disclosure. The maintenance execution rate screen 620 may be displayed by any one of the server apparatus 104, the terminal apparatus 101, and the image forming apparatus 103.

On the maintenance execution rate screen 620 of FIG. 17, the maintenance level of the user (enterprise customer) is also displayed. The maintenance execution rate screen 620 displays execution rate display fields 621 to 624 for the image forming apparatuses 103 respectively. FIG. 17 illustrates a case in which four execution rate display fields are displayed. Alternatively, one execution rate display field may be displayed in a large size. Still alternatively, five or more execution rate display fields may be displayed.

The execution rate display fields 621 to 624 include maintenance execution rates 625 to 628, respectively, for each of the levels 1 to 3, which are the work skill levels. A description is now given of how to calculate the maintenance execution rates 625 to 628.

First, what is to be aggregated is the maintenance execution log information 1008a of maintenance of which a person in charge of the maintenance (not a person who performs the maintenance) is the user (enterprise customer). Further, the user can instruct the server apparatus 104 to aggregate only the additional maintenance, only the regular maintenance, or a combination of the regular maintenance and the additional maintenance. In the present embodiment, since it is assumed that the user performs all of the regular maintenance, and the increase of the execution rate of the additional maintenance is desired, the execution rate of the additional maintenance is focused on in the following description. In the following description, the additional maintenance includes the accelerated maintenance. Alternatively or in addition, the execution rate of only the accelerated maintenance among the additional maintenance may be aggregated.

The aggregation unit 16 obtains, for each of the work skill levels, the first number by aggregating the number of maintenances that have been performed on the basis of the maintenance execution log information 1008a. Further, the aggregation unit 16 obtains, for each of the work skill levels, the second number by aggregating the number of the maintenances that have not been performed on the basis of the maintenance execution log information 1008a.

The aggregation unit 16 obtains the ratio of the first number to the total of the first number and the second number as the maintenance execution rate.

The maintenance that has not been performed means that the maintenance has not been performed (e.g., there is no registration of a person who has performed the maintenance) even when a certain time period has elapsed since a scheduled date (in the case of regular maintenance) or a recommendable date (in the case of additional maintenance).

The screen generation unit 19 arranges the execution rates aggregated by the aggregation unit 16 and bar charts representing the execution rates in the execution rate display fields 621 to 624. Thus, when the notification destination of the maintenance execution is the user (enterprise customer), the maintenance execution rate screen 620 can display the maintenance execution rates 625 to 628 of the additional maintenance for each of the work skill levels. The screen generation unit 19 can also display the maintenance execution rate for the regular maintenance or for the combination of the regular maintenance and the additional maintenance.

The maintenance execution rate screen 620 further includes detail buttons 621a to 624a. In the detail buttons 621a to 624a, a uniform resource locator (URL) that accepts a request for changing the maintenance level of the maintenance level contract information 1006a is embedded. In response to pressing the detail buttons 621a to 624a by a user, the maintenance execution rate screen 620 transitions to the web page. Thus, an application for a change of the maintenance level is made available.

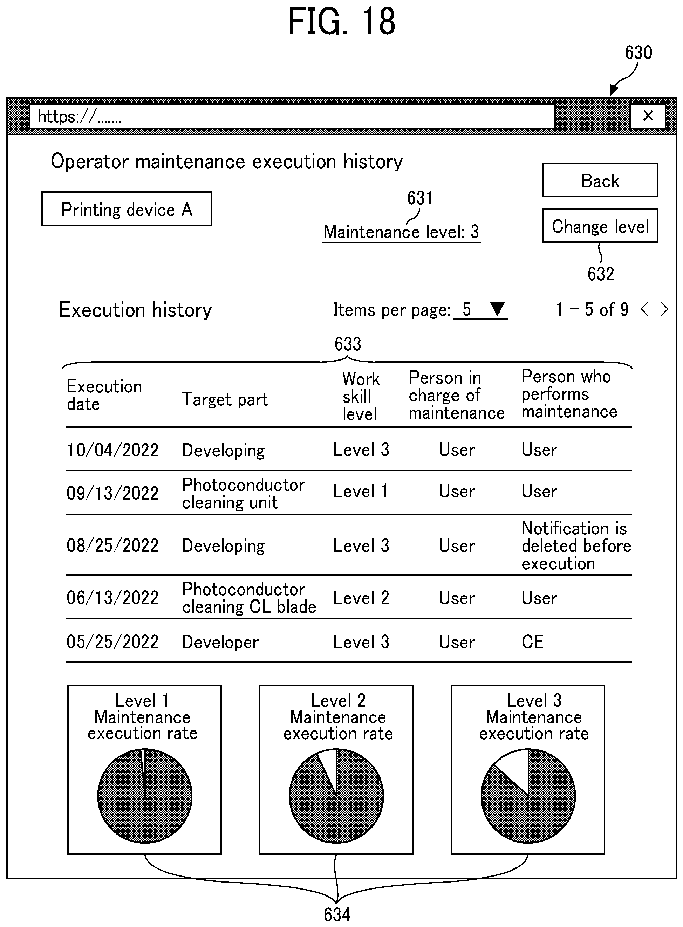

FIG. 18 illustrates a maintenance execution rate details display screen 630. The maintenance execution rate details display screen 630 includes a maintenance level 631 of the user (enterprise customer), a level change button 632, a maintenance execution log 633, and a pie chart 634 indicating the execution rates. The maintenance execution log 633 is the same or substantially the same as the maintenance execution log described above with reference to FIG. 16.

The maintenance execution rate details display screen 630 displays the execution rate of the additional maintenance for which a person in charge of maintenance is a user (enterprise customer) in the additional maintenance for which the notification destination of the maintenance execution is the user (enterprise customer). For this reason, the maintenance execution rate is aggregated in the same or substantially the same manner as described above with reference to FIG. 17. The screen generation unit 19 converts the maintenance execution rate to the pie chart 634.

Further, the maintenance execution rate details display screen 630 includes the level change button 632. The level change button 632 receives a request for changing the maintenance level of the maintenance level contract information 1006a. In response to pressing of the level change button 632, a web page for applying for a change of the maintenance level is displayed.

### Modification of Maintenance Execution Rate Screen

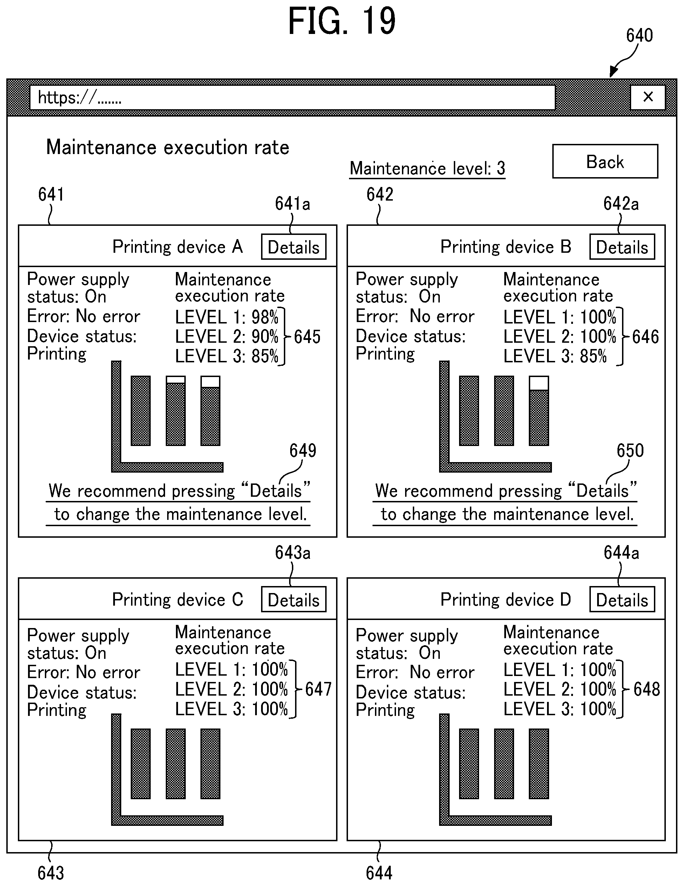

FIG. 19 illustrates a maintenance execution rate screen 640 on which a comment proposing a change of the maintenance level is displayed. The maintenance execution rate screen 640 illustrated in FIG. 19 displays maintenance execution rates 645 to 648 in execution rate display fields 641 to 644, respectively. In FIG. 19, the execution rates in the execution rate display fields 641 and 642 are less than a threshold value. The threshold is, for example, 100%.

It is estimated that the execution rate is low because the maintenance level contracted in the operator maintenance is high, and thus there are many maintenances that cannot be performed by the user (enterprise customer).

Accordingly, the proposal unit 17 creates a comment 649 and a comment 650 that propose a change of the maintenance level. The screen generation unit 19 generates the maintenance execution rate screen 640 including the comment 649 and the comment 650. The threshold value based on whether to create the comment is determined appropriately. In the case of FIG. 19, when any one of the levels 1 to 3 is less than 100%, the proposal unit 17 creates the comment. The different threshold values may be determined for the level 1 to the level 3, respectively.

A URL that accepts a request for changing the maintenance level of the maintenance level contract information 1006a is embedded in the comment 649 and the comment 650. In response to pressing the comment 649 or the comment 650 by a user, the maintenance execution rate screen transitions to a web page. Thus, an application for a change of the maintenance level is made available.

The functions of detail buttons 641a to 644a may be the same or substantially the same as the functions of the detail buttons 621a to 624a described above with reference to FIG. 17. A recommendation of the accelerated execution may be notified on the maintenance execution rate screen 640 illustrated in FIG. 19.

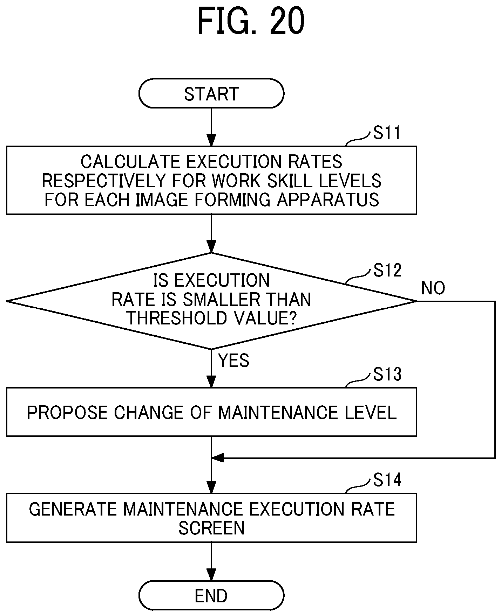

FIG. 20 is a flowchart of a process in which the server apparatus 104 recommends the application for the change of the maintenance level. The process of FIG. 20 starts when the user (enterprise customer) inputs an operation for displaying the maintenance execution rate screen 640 to the server apparatus 104, the image forming apparatus 103, or the terminal apparatus 101.

First, the aggregation unit 16 calculates, for each of the image forming apparatuses 103, the execution rates respectively for the work skill levels (S11).

Subsequently, the proposal unit 17 determines whether there is even one work skill level for which the execution rate is less than the threshold value (S12).

When there is even one work skill level for which the execution rate is less than the threshold value (Yes in step S12), the proposal unit 17 proposes a change of the maintenance level (S13). The proposed changed maintenance level may be a level lower than the current maintenance level by one. Alternatively, the proposed changed maintenance level may be the highest level among the maintenance levels for which the execution rates are equal to or higher than the threshold value. Even though it rarely happens, if the proposed changed maintenance level is equal to or higher than the current maintenance level of the user, the proposal unit 17 does not present any proposal.

The screen generation unit 19 generates the maintenance execution rate screen 640 including the execution rates for the work skill levels, bar charts representing the execution rates, and the comment proposing the change of the maintenance level created in step S13 (S14).

The communication unit 11 transmits the screen information of the maintenance execution rate screen 640 created in step S14 to the image forming apparatus 103 or the terminal apparatus 101. The server apparatus 104, the image forming apparatus 103, or the terminal apparatus 101 displays the maintenance execution rate screen 640.

The description given above with reference to FIG. 20 is of a case where the proposal unit 17 proposes lowering the maintenance level of the user. Alternatively, when the execution rate is equal to or greater than the threshold value, the proposal unit 17 may propose raising the maintenance level of the user.

### Modification of Maintenance Execution Rate Screen

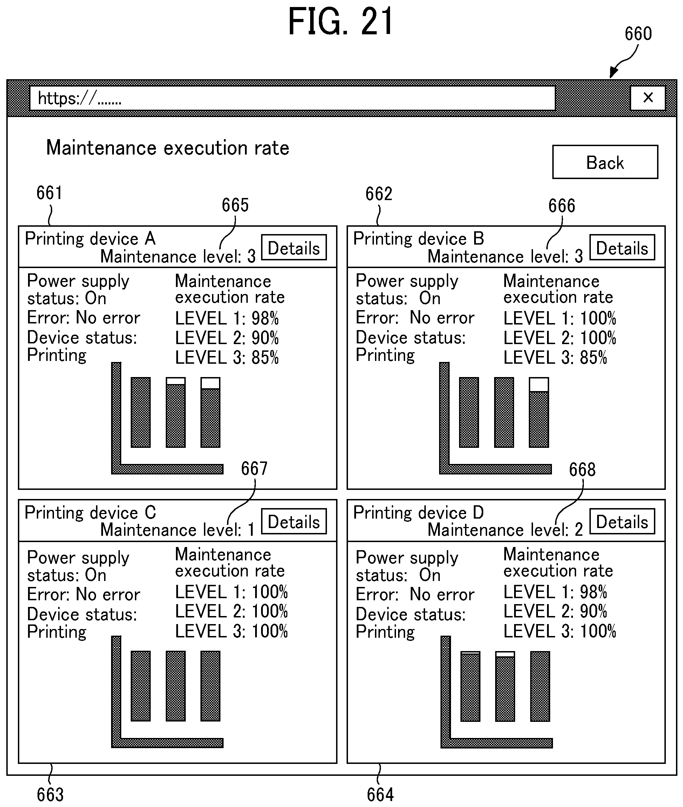

FIG. 21 illustrates a maintenance execution rate screen 660 on which the maintenance level is displayed for each of the image forming apparatuses. In the maintenance execution rate screen 660 of FIG. 21, maintenance levels 665 to 668 are displayed in execution rate display fields 661 to 664, respectively. The maintenance level is contracted for each company. However, the user (enterprise customer) can also request to conclude a contract for each image forming apparatus 103. In the case of such a contract, the screen generation unit 19 acquires the maintenance levels 665 to 668 for the image forming apparatuses, respectively, and generates the maintenance execution rate screen 660.

The server apparatus 104, the image forming apparatus 103, or the terminal apparatus 101 displays the maintenance levels 665 to 668 for the image forming apparatuses, respectively. The user can check how the maintenance execution rates are different for the maintenance levels 665 to 668 and consider changing the maintenance levels of the image forming apparatuses 103.

### Modification of Maintenance Execution Rate Screen

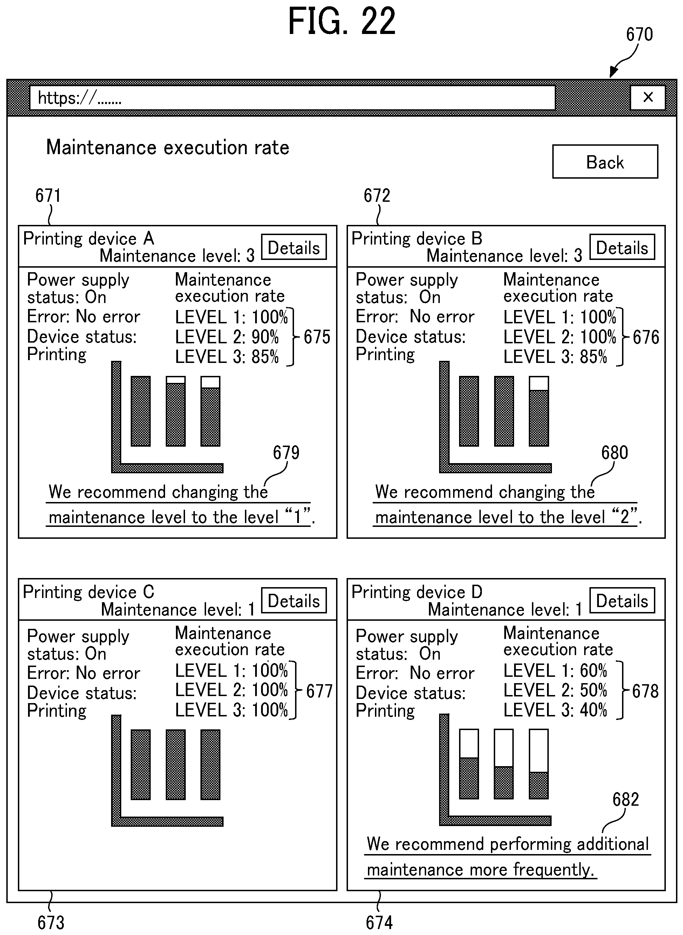

FIG. 22 illustrates a maintenance execution rate screen 670 on which a comment proposing the change of a maintenance level and the maintenance level are displayed for each of the image forming apparatuses 103. In FIG. 22, for each of the work skill levels, maintenance execution rates 675 to 678 are displayed in execution rate display fields 671 to 674, respectively. In FIG. 22, a comment 679 and a comment 680 are displayed in the execution rate display field 671 and the execution rate display field 672, respectively. The proposal unit 17 proposes the change of a maintenance level to the highest work skill level among the work skill levels for which the execution rate is equal to or greater than a threshold value. For example, when the threshold value is 100, the proposal unit 17 proposes the change of the same maintenance level as the highest work skill level among the work skill levels for which the execution rate is 100%.

In the execution rate display field 671, the maintenance execution rate of the work skill level "Level 1" is 100%, the maintenance execution rate of the work skill level "Level 2" is 90%, and the maintenance execution rate of the work skill level "Level 3" is 85%. This means that there is possibility that the user (enterprise customer) lacks the skill to perform the maintenance of which the work skill level is "Level 2" and "level 3." For this reason, the proposal unit 17 proposes the change of the maintenance level to the level 1 with the comment 679.

On the other hand, in the execution rate display field 672, the maintenance execution rate 676 of the work skill level "Level 3" is 85%, and the maintenance execution rate 676 of the work skill level "Level 2" is 100%. Accordingly, the proposal unit 17 proposes the change of the maintenance level to the level 2 with the comment 680. In other words, there is possibility that the user (enterprise customer) lacks the skill to perform the maintenance of which the work skill level is "Level 3." Accordingly, the proposal unit 17 proposes the change of the maintenance level to the level 2 with the comment 680.

In the execution rate display field 673, the maintenance execution rates of all the work skill levels "Level 1" to "Level 3" are 100%, and the maintenance level is "1." Accordingly, the proposal unit 17 does not propose a change of the maintenance level.

In the execution rate display field 674, a comment 682 "We recommend that you perform additional maintenance more frequently." is displayed. For a printing device D, although the maintenance level is already "1," the execution rate is less than a threshold value for the work skill level "Level 1." For this reason, the proposal unit 17 does not have to propose a change of the maintenance level. Since the additional maintenance is not compulsory, the proposal unit 17 does not propose the change to the maintenance level in a case where the execution rate is less than the threshold value even for the work skill level "Level 1."

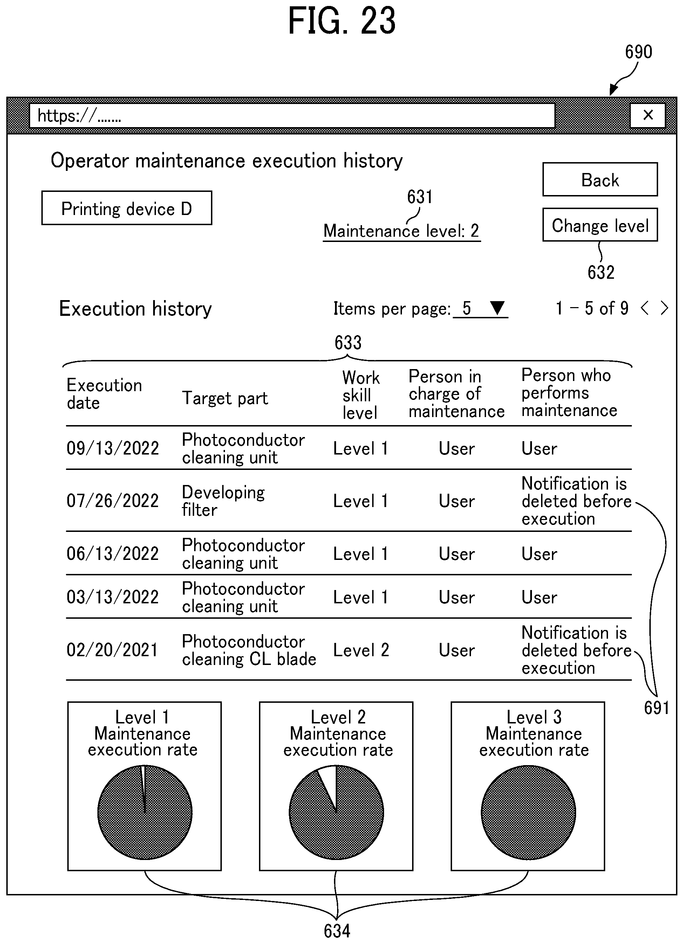

A supplemental description is now given with reference to FIG. 23. FIG. 23 illustrates a maintenance execution rate details display screen 690 for an image forming apparatus 103D (i.e., the printing device D). As illustrated in FIG. 23, there are two messages 691 "Notification is deleted before execution" in the item of the person who performs maintenance. From such messages, it is understood that the additional maintenance has not been executed.

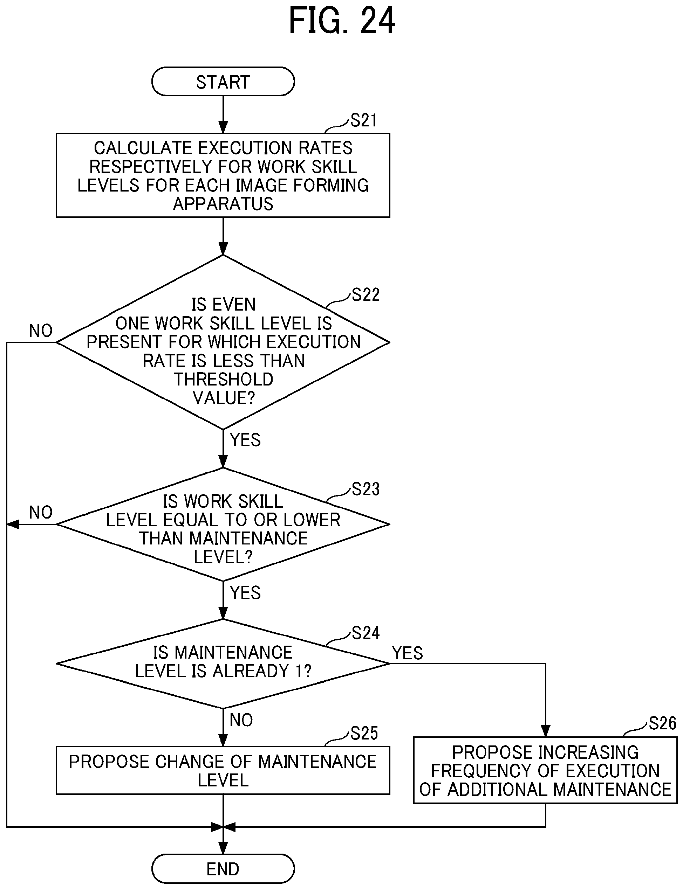

FIG. 24 is a flowchart of a process in which the server apparatus 104 makes a proposal for changing a maintenance level. The process of FIG. 24 starts when the user (enterprise customer) inputs an operation for displaying the maintenance execution rate screen to the server apparatus 104, the image forming apparatus 103, or the terminal apparatus 101.

First, the aggregation unit 16 calculates, for each of the image forming apparatuses, the execution rates of additional maintenance of which person in charge of maintenance is a user (enterprise customer) for the work skill levels (S21).

Subsequently, the proposal unit 17 determines whether there is a work skill level of which execution rate is less than a threshold value (S22). The threshold value may be a value other than 100%.

When the determination result is Yes in step S22, the proposal unit 17 determines whether the work skill level of which execution rate is less than the threshold value is equal to or lower than a maintenance level with which the user (enterprise customer) or the image forming apparatus 103 agrees in a contract (S23).

When the determination result is Yes in step S23, the proposal unit 17 determines whether the maintenance level is already "1" (S24).

When the determination result in step S24 is No, the proposal unit 17 proposes a change of the maintenance level (S25). The maintenance level is changed to the highest maintenance level among the work skill levels of which execution rate is equal to or higher than the threshold value.

When the determination result is Yes in step S24, the proposal unit 17 proposes the increase of the frequency of performing additional maintenance (S26).

With the above process, the server apparatus 104 can estimate that the user (enterprise customer) lacks the skill to perform maintenance on the basis of the execution rate and propose a change of the maintenance level to the work skill level of which execution rate is equal to or higher than the threshold value.

### Example Notification for Recommending Accelerated Execution

FIG. 25 illustrates an accelerated execution proposal screen 700 that notifies a recommendation for an accelerated execution. The accelerated execution proposal screen 700 may be displayed by any one of the server apparatus 104, the terminal apparatus 101, and the image forming apparatus 103.

The accelerated execution proposal screen 700 displays a title 701 indicating "Recommendation of maintenance implementation," and a message 702 indicating "As a result of analysis of machine data, accelerated implementation of maintenance is recommended. To keep the machine in optimum condition, press the "Execute Maintenance" button to perform maintenance." The accelerated execution proposal screen 700 further displays a target module 703 and a user maintenance level 704.

The target module 703 is acquired from the item "target module" in the maintenance information storage unit 4001. The user maintenance level 704 is a work skill level for the target module 703.

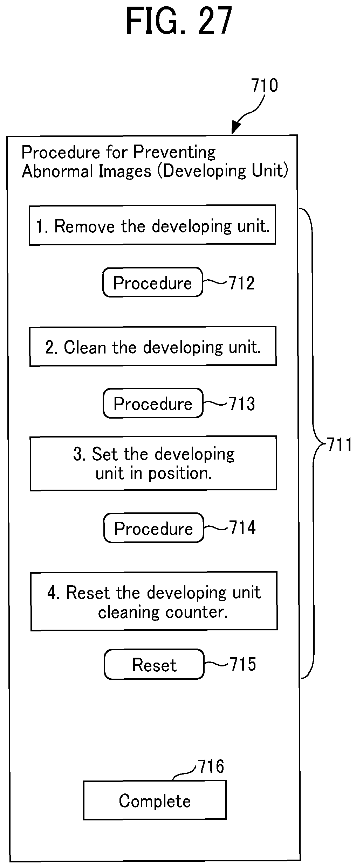

In response to the user pressing an "Execute Maintenance" button 705, a guidance screen for the maintenance work is displayed (see FIG. 27). In response to the user pressing an "Ask Customer Engineer To Do Work" button 706, the content of additional maintenance for which an accelerated execution of regular maintenance is recommended is transmitted to the customer engineer (customer support center) via e-mail or other means.

In response to the user pressing a "Close" button 707 without performing an accelerated execution of regular maintenance, an icon or a thumbnail indicating that the accelerated execution is being proposed is kept being displayed on a part of the screen. Alternatively, the accelerated execution proposal screen 700 may be repeatedly displayed at predetermined times. Examples of the predetermined times include a time at which the image forming apparatus 103 is powered on, a time at which the period of time for which the image forming apparatus 103 is not in operation becomes greater than or equal to a threshold value, and a time at which the user logs in.

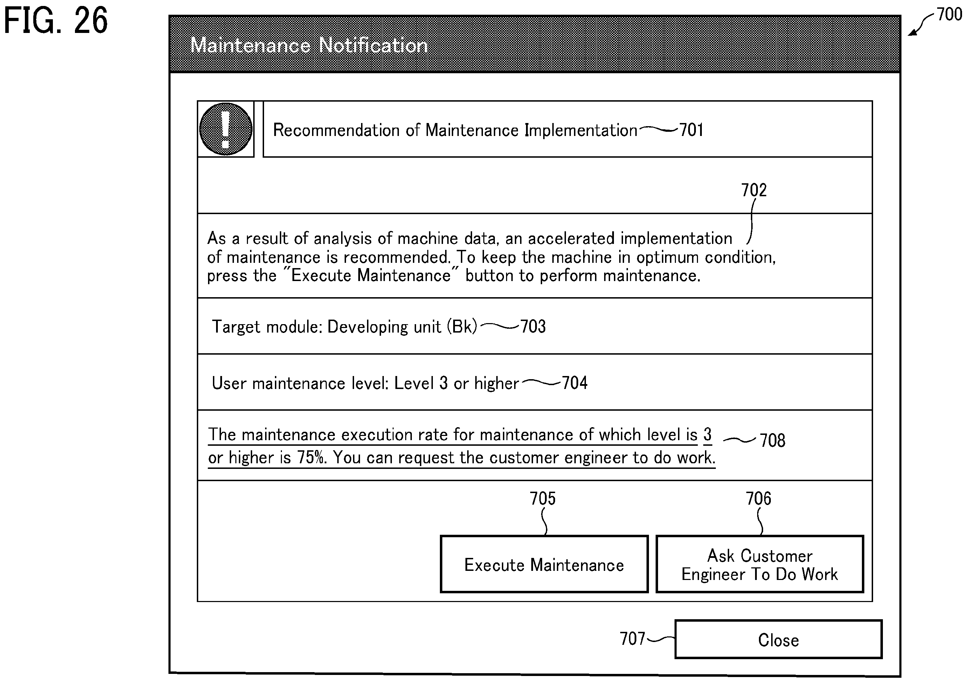

FIG. 26 illustrates a modification of the accelerated execution proposal screen 700. In the following description of FIG. 26, differences from FIG. 25 are described. On the accelerated execution proposal screen 700 illustrated in FIG. 26, a customer engineer request recommendation message 708 proposed by the proposal unit 17 is displayed.

The customer engineer request recommendation message 708 is "The maintenance execution rate for maintenance of which level is 3 or higher is 75%. You can request the customer engineer to do the work."

This "75%" is a maintenance execution rate for the same work skill level as the target module for which the recommendation for the execution of additional maintenance is notified on the accelerated execution proposal screen 700 illustrated in FIG. 26. When this execution rate is less than the threshold value, the notification unit 18 determines to notify the customer engineer request recommendation message 708. For this reason, the customer engineer request recommendation message 708 is proposed only when the execution rate of the additional maintenance in the target module is less than the threshold value. The user can recognize that the execution rate is low and consider requesting a customer engineer to perform maintenance by pressing the "Ask Customer Engineer To Do Work" button 706. The "Ask Customer Engineer To Do Work" button 706 serves as a display component according to an embodiment of the present disclosure.

### Execution of Maintenance

FIG. 27 illustrates a guidance screen 710 according to an embodiment of the present disclosure. The guidance screen 710 presents a work procedure 711 for additional maintenance. In the example illustrated in FIG. 26, the work procedure 711 includes the steps below.
1. The operator removes a developing unit.
2. The operator cleans the developing unit.
3. The operator sets the developing unit in position.
4. The operator resets a developing unit cleaning counter.

The guidance screen 710 displays buttons 712 to 714 below the respective steps of the work procedure 711 to display the details of the steps. Since no further details are given for the step "4. Reset the developing unit cleaning counter," a reset button 715 is displayed.

The user performs the four steps and presses a "Complete" button 716. Then, an execution log is recorded in the maintenance execution log information storage unit 1008.

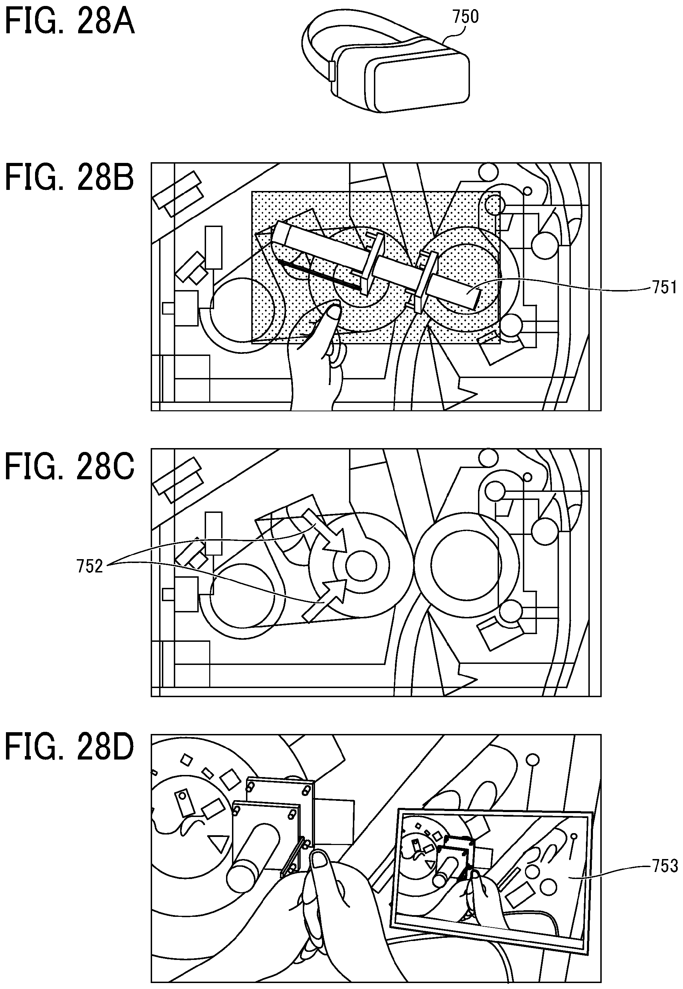

As illustrated in FIG. 28A to FIG. 28D, maintenance may be performed with an augmented reality (AR) headset. FIG. 28A to FIG. 28D are schematic diagrams each illustrating the maintenance performed using an AR headset. FIG. 28A is an external view of an AR headset 750. The AR headset is a type of a display apparatus that uses a head-mounted display to display computer-generated images and sounds superimposed on elements of the real world.

To the user wearing the AR headset, a series of information that assists additional maintenance is displayed. As illustrated in FIG. 28B, when the AR headset detects with a camera that the user has opened the door of the image forming apparatus 103, an image of a target module 751 is displayed as being superimposed on the view of various target modules behind the door. The user searches for a target module behind the door while viewing the image of the target module 751.

In parallel with the user's search, the AR headset monitors the scene behind the door with a camera and detects the target module through image processing. In one embodiment, the AR headset may detect the target module faster. As illustrated in FIG. 28C, in response to the successful detection of the target module, the AR headset displays, for example, arrows 752 to point to the target module in the real machine. In response to the AR headset detecting, with the camera, the removal of the target module from the real machine by the user, as illustrated in FIG. 28D, the AR headset displays a moving image 753 representing the work procedure of the additional maintenance. The user can perform maintenance on the target module at hand while viewing the moving image 753.

Thus, using the AR headset makes it easier for the user to perform regular maintenance.

### Example Mail to be Transmitted to Customer Engineer

FIG. 29 illustrates a display example of a mail text 760 that notifies a customer engineer that additional maintenance has occurred when the notification unit 18 notifies the customer engineer. The mail text 760 includes a sender 761 indicating the server apparatus 104, a destination 762 indicating the customer engineer, reference information 763, and a message 764. Since a target module is described in the message 764, the customer engineer can determine what kind of maintenance is to be performed.

The message 764 also includes a description "If the customer has trouble with maintenance, please also consult the customer about changing the agreement level." Accordingly, the customer engineer can recommend the customer to change the agreement level at the time of maintenance.

Relation with Service-Level Agreement (SLA) A service-level agreement (SLA) is a service level guarantee regarding the levels of service agreed between a service provider and a user of the service. Examples of the levels of service include a definition, a scope, content, and a goal to be achieved. The SLA specifies to what extent the service provider can guarantee quality to a contractor (i.e., the user).

The following description is of a case where the maintenance level described with reference to, for example, FIG. 11 is information corresponding to the SLA level, and the determination unit 45 determines the notification destination on the basis of the SLA level instead of the maintenance level described in the above embodiment.

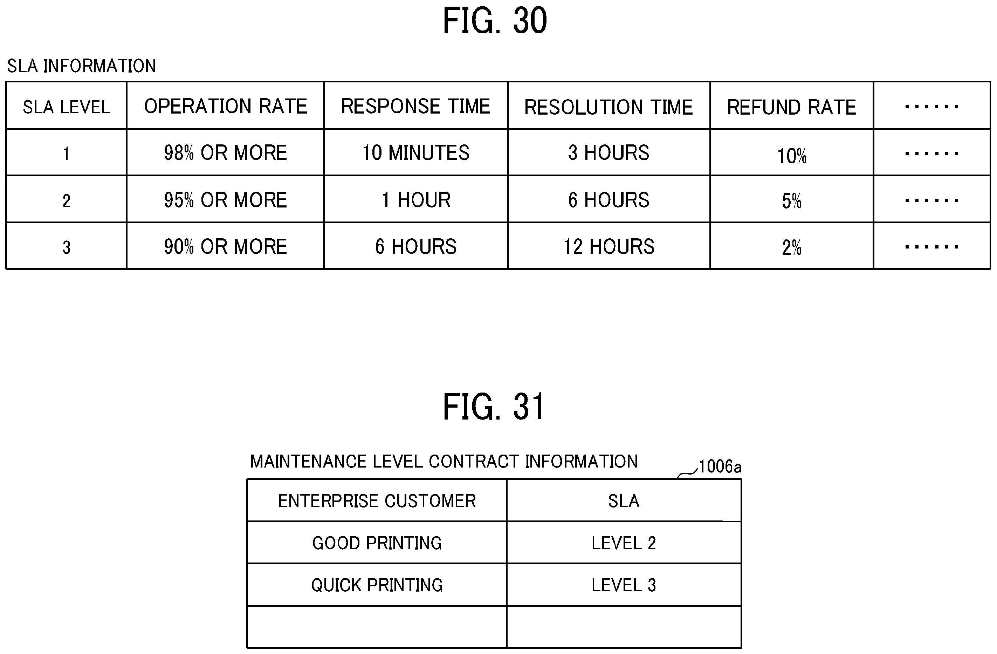

FIG. 30 is a diagram illustrating SLA information according to an embodiment of the present disclosure. The SLA information defines success criteria information for items such as an operating time, a response time, a resolution time, and a refund rate. The SLA information serves as service level information according to an embodiment of the present disclosure. Since the SLA level corresponds to the maintenance level, the values of 1 to 3 are set. The guaranteed quality is higher in the order of SLA level 1, SLA level 2, and SLA level 3.

The SLA level may be in five stages, for example.

What kind of quality is to be guaranteed in the SLA information may vary from service to service. FIG. 30 illustrates a case where the guaranteed qualities are presented for an operating rate, a response time, a resolution time, and a refund rate according to the SLA levels, according to an embodiment of the present disclosure. The operating rate is a ratio of the time period during which the image forming apparatus 103 can be used without failure to the total working time. The response time is the time period it takes for a service provider (person) to respond to a notification of the occurrence of a certain abnormality. The resolution time is a time period from the occurrence of a certain abnormality until the abnormality is resolved. The refund rate indicates how much the service fee is discounted if the quality is not satisfied. In addition to the content illustrated in FIG. 30, the SLA information may define the qualities of items corresponding to the service, such as the presence of additional support and a series of actions to be taken when the quality is not satisfied.

For example, the SLA information may include the skill level of a maintenance execution candidate, a current location, business hours, holidays, and a holiday calendar.

The skill level of a maintenance execution candidate guarantees that a customer engineer having a skill level equal to or higher than a certain level performs maintenance. The smaller the SLA level, the higher the skill level.

The current location guarantees that a customer engineer within a certain distance from the location of the user (enterprise customer) performs maintenance. The smaller the SLA level, the shorter the distance.

The business hours guarantee a time slot such as 9:00 to 18:00 or 24 hours in which a customer engineer is available for maintenance. The smaller the SLA level, the longer the business hours.

The holidays define days on which the customer engineer is not available for maintenance. The smaller the SLA level, the fewer the holidays.

The holiday calendar provides days when a customer engineer is available for maintenance and days when the customer engineer is not available for maintenance in the form of a calendar. The smaller the SLA level, the fewer the holidays.

The SLA information is stored in, for example, the HDD 504 or the RAM 503 illustrated in FIG. 6. Alternatively or in addition, the SLA information is stored in a memory (storage device) external to the server apparatus 104. Examples of such an external memory include a cloud server and an external platform.

FIG. 31 illustrates the maintenance level contract information 1006a in which the maintenance level is replaced with the SLA level. As can be seen from a comparison with FIG. 11, the maintenance level is replaced with the SLA level. In other words, the users (enterprise customers) contract for an SLA level corresponding to the desired degree of service quality assurance.

Accordingly, in the maintenance notification destination information 1007a illustrated in FIG. 12, the levels 1 to 3 (work skill levels) of the maintenance notification destination information 1007a are compared with the SLA levels. When a failure is predicted and additional maintenance based on the failure prediction occurs, the notification destination determination unit 14 identifies the SLA level of the user (enterprise customer) on the basis of maintenance level contract information 1006a.

The notification destination determination unit 14 identifies one of a customer engineer and the user (enterprise customer) associated with the target module of the additional maintenance and the SLA level on the basis of the maintenance notification destination information 1007a. In other words, when the SLA level of the user (enterprise customer) is equal to or higher than the work skill level, the notification destination determination unit 14 determines the user (enterprise customer) as the notification destination. By contrast, when the SLA level of the user is lower than the work skill level, the notification destination determination unit 14 determines the service provider of the maintenance service as the notification destination.

There may be multiple pieces of SLA information between a service provider and one user (enterprise customer). When there are multiple pieces of SLA information, it means that one user (enterprise customer) concludes contracts at different SLA levels or concludes a different contract with customized SLA information. When there are multiple pieces of SLA information, SLA information that is created first (or latest) is preferentially applied. Alternatively, the user may associate the SLA information with a time range, and the SLA level may be determined on the basis of the SLA information associated with the current time.

The service management system according to the present embodiment can notify an appropriate person in charge of performing maintenance of the execution of additional maintenance on the basis of a device status when an operator maintenance contract is concluded.

Further, the service management system displays the execution rates of additional maintenance and regular maintenance for respective work skill levels. When the execution rate is less than the threshold value, the service management system proposes a change in the maintenance level. Further, when the maintenance execution rate is less than the threshold value, the service management system proposes requesting a customer engineer to do the work.

The description given above is of a case where the service management system proposes the change of the maintenance level on the basis of the execution rate. Alternatively, the service management system may propose the change of the maintenance level on the basis of the length of the time period during which the maintenance is performed. For example, the service management system stores an average time period required for a certain maintenance. When maintenance time takes much longer than the average time period, the service management system proposes lowering the maintenance level.

### Supplemental Description of Devices Other than Image Forming Apparatus

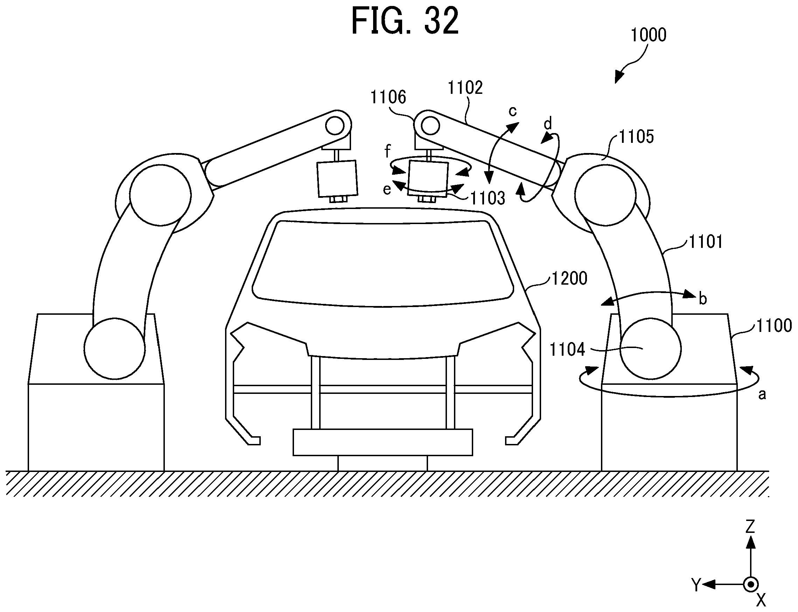

A description is now given of the configurations of some devices with reference to FIG. 32 to FIG. 34.

In the following description, as the devices, a liquid discharge apparatus and a 3D printer that paints, for example, an automobile are described.

### Liquid Discharge Apparatus

FIG. 32 is an entire schematic view of a liquid discharge apparatus. The liquid discharge apparatus illustrated in FIG. 32 is a coating robot 1000 that coats, for example, the body of an automobile. An X-axis direction, a Y-axis direction, and a Z-axis direction are indicated by arrows in the drawings, which are three directions intersecting with each other. The X-axis direction is, for example, the front-back direction of the body of the automobile which is an object to be coated. The Y-axis direction is the width direction of the body of the automobile. The Z-axis direction is the up-down direction in FIG. 32.

As illustrated in FIG. 32, the coating robot 1000 is installed so as to face an object 1200 such as the surface of the body of the automobile. The coating robot 1000 includes a base 1100, a first arm 1101, a second arm 1102, and a head unit 1103. The first arm 1101 is coupled to the base 1100. The second arm 1102 is coupled to the first arm 1101. The head unit 1103 is coupled to the second arm 1102.

The coating robot 1000 includes a first joint 1104, a second joint 1105, and a third joint 1106. The first joint 1104 couples the base 1100 and the first arm 1101. The second joint 1105 couples the first arm 1101 and the second arm 1102. The third joint 1106 couples the second arm 1102 and the head unit 1103.

The coating robot 1000 is, for example, a multi-articulated robot. The base 1100 is rotatable in the direction indicated by arrow a about a rotation shaft extending in the Z-axis direction. The base 1100 supports one end of the first arm 1101 via the first joint 1104.

The first arm 1101 is swingable in the direction indicated by arrow b about a rotation shaft parallel to an X-Y plane. The other end of the first arm 1101 supports one end of the second arm 1102 via the second joint 1105. The second arm 1102 is swingable in the direction indicated by arrow c about a rotation shaft parallel to the X-Y plane. Further, the second arm 1102 is rotatable in the direction indicated by arrow d about a rotation shaft extending in the longitudinal direction of the second arm 1102.

The other end of the second arm 1102 supports the head unit 1103 via the third joint 1106. The head unit 1103 is swingable in the direction indicated by arrow e about a rotation shaft extending in the direction intersecting the longitudinal direction of the second arm 1102. Further, the head unit 1103 is rotatable in the direction indicated by arrow f about a rotation shaft extending in the direction from the third joint 1106 toward the head unit 1103.

The coating robot 1000 freely moves the head unit 1103 relative to the object 1200. The coating robot 1000 is configured to accurately position the head unit 1103 with respect to the object 1200. The coating robot 1000 accurately positions the head unit 1103 at a coating position for coating the object 1200. The coating robot 1000 discharges paint toward the object 1200 to coat the object 1200 with the paint.

In the present embodiment, the system configuration in which one coating robot 1000 is disposed on each side of the object 1200 is illustrated, but the coating robot 1000 is not limited to being disposed on each side of the object 1200. The number of coating robots 1000 installed may be one, or three or more with respect to the object 1200.

### 3D Printer

A 3D printer is a device that can produce a three-dimensional object on the basis of three-dimensional shape data. The 3D printer is also called a lamination fabrication apparatus, an additive manufacturing (AM) apparatus, and an AM machine. A fabrication method by the 3D printer typically includes, for example, an inkjet method, a fused deposition modeling (FDM) method, and a powder adhering method. Any other suitable fabrication methods may be used. In the inkjet method, a liquid resin is applied and then irradiated with, for example, ultraviolet light to harden the liquid resin little by little. In the FDM method, resin that is melted by heat is gradually piled up. In the powder adhering method, adhesive is sprayed onto powdered resin. In the following description, the 3D printer using the FDM method is described according to an embodiment of the present disclosure.

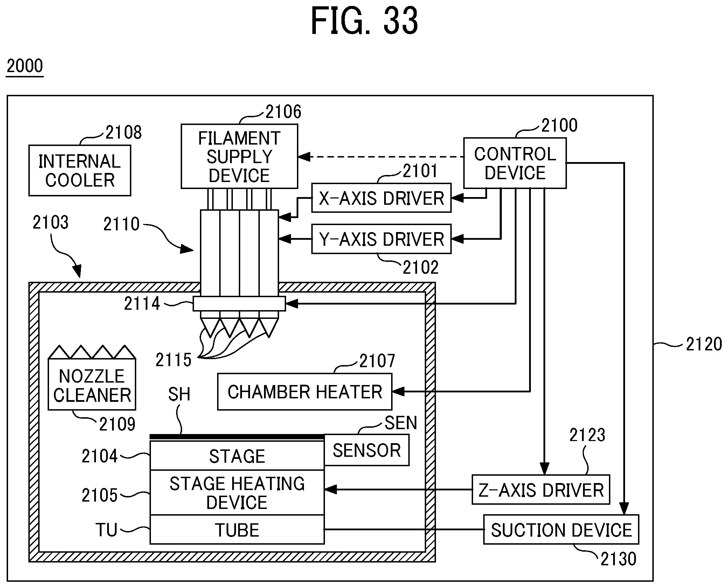

FIG. 33 is a schematic diagram illustrating a hardware configuration of a 3D printer 2000 according to an embodiment of the present disclosure. For example, as illustrated in FIG. 33, the 3D printer 2000 includes a chamber 2103 inside a frame 2120. The interior of the chamber 2103 is a processing space to fabricate an object three-dimensionally. A stage 2104 is provided as a placement table in the processing space, i.e., in the chamber 2103. In the present embodiment, a fabrication object is manufactured on the stage 2104.

A fabrication head 2110 as fabricating means is disposed above the stage 2104 in the chamber 2103. Further, the fabrication head 2110 includes discharging nozzles 2115 that discharge filaments at the bottom. Although in the present embodiment, the fabrication head 2110 includes the four discharging nozzles 2115, the number of the discharging nozzles 2115 is any number. The fabrication head 2110 further includes a head heating device 2114 to heat the filaments supplied to the discharging nozzles 2115. As described above, the 3D printer manufactures the fabrication object using the filaments held in advance.

Further, the temperature inside the frame 2120 is adjusted by an internal cooler 2108.

The filament is, for example, a material such as acrylonitrile butadiene styrene (ABS) resin or polylactic acid (PLA) resin.

Further, the filament is thermoplastic. Accordingly, the filament is heated and hot when discharged from the 3D printer. After being discharged, the filaments are cooled by, for example, air cooling to be cured. Using such a property, the 3D printer discharges the filament to manufacture the fabrication object.

The filament has an elongated wire shape, for example. The filament is positioned in the 3D printer 2000 as being wound, for example. Further, a filament supply device 2106 supplies the filament to the discharging nozzles 2115 of the fabrication head 2110.

An X-axis driver 2101 drives the fabrication head 2110 to move in the X-axis direction. The X-axis driver 2101 includes, for example, an actuator, a mechanism, a power supply, and an electronic circuit.

In substantially the same manner, a Y-axis driver 2102 drives the fabrication head 2110 to move in the Y-axis direction. The Y-axis driver 2102 includes, for example, an actuator, a mechanism, a power supply, and an electronic circuit. Further, the fabrication head 2110 is driven by a Z-axis driver 2123 to move in the Z-axis direction.

The Z-axis driver 2123 includes, for example, an actuator, a mechanism, a power supply, and an electronic circuit.

In the illustrated example, the control device 2100 issues a position command to the X-axis driver 2101, the Y-axis driver 2102, and the Z-axis driver 2123. The X-axis driver 2101, the Y-axis driver 2102, and the Z-axis driver 2123 move the stage 2104 to the commanded position on the basis of the command from the control device 2100. The control device 2100 controls the devices.

As illustrated in FIG. 33, the 3D printer 2000 preferably further includes a stage heater 2105 that can heat the stage 2104 and the fabrication object on the stage 2104. The stage heater 2105 is, for example, a heater.

A chamber heater 2107 as a heating means for heating the interior of the chamber 2103 is disposed in the chamber 2103 (the processing space). The 3D printer 2000 preferably performs manufacturing with the temperature in the chamber 2103 maintained at a target temperature by the chamber heater 2107.

The discharging nozzles 2115 discharge the filaments of different types. Alternatively, the discharging nozzles 2115 discharge the filaments of the same type. Further, in the present embodiment, the 3D printer 2000 heats and melts the filament supplied by the filament supply device 2106 by the head heating device 2114.

Subsequently, the 3D printer 2000 extrudes the molten filament from the discharging nozzles 2115, to discharge the filament. Further, the 3D printer 2000 laminates multiple layers formed by the filaments on the stage 2104 by the discharge, to manufacture the fabrication object.

The 3D printer 2000 may use a support material. In other words, the support material may be supplied to the discharging nozzles 2115. The support material may be made of a material different from the material of the filament. The support material is removed from the fabrication object made of the filament after the fabrication object is manufactured. For example, the support material is first heated and melted by the head heating device 2114 in substantially the same manner as the filament. Subsequently, the molten support material is extruded and discharged from the discharging nozzles 2115, and is laminated in substantially the same manner as the filament.

Further, as illustrated in FIG. 33, the 3D printer 2000 preferably has a configuration that can suck a sheet SH placed on the stage 2104. For example, as illustrated in FIG. 33, a tube TU and a suction device 2130 suck the sheet SH on the basis of a status detected by a sensor SEN.

Further, as illustrated in FIG. 33, the 3D printer 2000 preferably includes a nozzle cleaner 2109. The nozzle cleaner 2109 cleans the discharge nozzles 2115 so that, for example, impurities are not mixed with the discharged filament.

Accordingly, in the present embodiment, the 3D printer 2000 performs a preheating process of raising the temperature in the chamber 2103 to a target temperature before starting manufacturing. For example, during the preheating process, the chamber heater 2107 heats the interior of the chamber 2103 to raise the temperature of the interior of the chamber 2103 to around the target temperature. On the other hand, during manufacturing, the chamber heater 2107 heats the interior of the chamber 2103 to maintain the temperature of the interior of the chamber 2103 near the target temperature. The operation of the chamber heater 2107 is controlled by the control device 2100.

The hardware configuration illustrate in FIG. 33 is merely one example, and the 3D printer 2000 can have any other suitable hardware configuration. For example, the 3D printer 2000 may include multiple control devices 2100. On the other hand, for example, the suction device 2130 may be omitted from the 3D printer 2000.

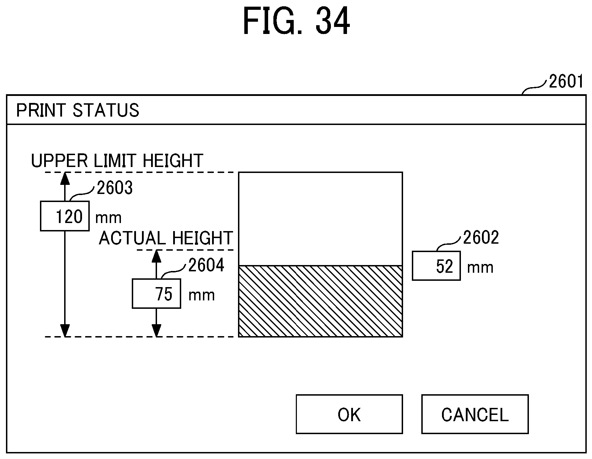

FIG. 34 is a diagram illustrating a progress status screen 2601 displayed on a display that the control device 2100 includes according to an embodiment of the present disclosure. On the progress status screen 2601 of FIG. 34, an actual height hx indicated by a reference numeral 2604 and an upper limit height information Mh indicated by a reference numeral 2603 are displayed.

A user can compare the actual height hx of a 3D model with the current height H of the fabrication object to recognize the progress of printing. Further, in a case where the orientation of the 3D model displayed by a 3D application and the orientation of the 3D model disposed in a virtual space of the 3D printer 2000 change, the user does not have to recognize the actual height of the 3D model.

### Applied Case

Although in the present embodiment, the description given is of a case in which the image forming apparatus 103 executes a native application and displays the maintenance schedule, this is merely one example. In another example, the image forming apparatus 103 displays the maintenance schedule using a general-purpose web browser. In this case, the server apparatus 104 creates a screen of the maintenance schedule.
The examples of configuration illustrated in, for example, FIG. 7 are divided according to main functions in order to facilitate understanding of processing by the server apparatus 104 and the image forming apparatus 103. The scope of the present invention is not limited by how the process units are divided or by the names of the process units. The

processing of the server apparatus 104 and the image forming apparatus 103 is divided into more segmentalized processing units according to the processing content. Further, one process may be divided to include a larger number of processes.

The apparatuses or devices described in the above-described embodiments are merely one example of multiple computing environments that implement the embodiments disclosed herein. In some embodiments, the DFE 102 includes multiple computing devices, such as a server cluster. The multiple computing devices are configured to communicate with one another through any type of communication link, including a network, a shared memory, etc., and perform the processes disclosed herein.

Further, the server apparatus 104 can be configured to share the disclosed processing steps, for example, the processing of FIG. 15, in various combinations. For example, a process executed by a predetermined unit may be executed by a plurality of information processing apparatuses included in the server apparatus 104. Further, the server apparatus 104 may be integrated into one server apparatus or may be divided into a plurality of apparatuses.

The functionality of the elements disclosed herein may be implemented using circuitry or processing circuitry which includes general purpose processors, special purpose processors, integrated circuits, application-specific integrated circuits (ASICs), digital signal processors (DSPs), field-programmable gate arrays (FPGAs), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system for determining execution of a service on a device, the service comprising maintenance, management, repair, or work required for maintenance, management, or repair, which are performed so that the device can continuously perform expected functions, the information processing system comprising:
a notification destination determination unit (14) configured to determine, based on a device status, a notification destination of the service according to first service level information that is associated with a device and a user of the device and defines a service to be performed by the user, the service to be performed by the user being different depending on the user; and
a notification unit (18) configured to notify the notification destination determined by the notification destination determination unit (14) of execution of the service,
wherein
the service is a second service different from a first service, the first service being periodically executed, the second service being additionally executed,
wherein
the notification destination determination unit (14) is configured to:
acquire, from service notification destination information that associates a plurality of target modules each of which is to be subjected to the second service respectively with a plurality of pieces of second service level information each of which relates to a service difficulty level, a particular second service level information corresponding to a particular target module that is to be subjected to the second service; and
determine the notification destination to be notified of an occurrence of the second service, based on the particular second service level information and the first service level information,
the information processing system further comprising a display control unit (32, 42) configured to display, based on service execution log information relating to execution of the second service, the service execution log information,
wherein the display control unit (32, 42) is configured to display an execution rate calculated based on a number of executed second services among the second service recorded in the service execution log information,
wherein
the display control unit (32, 42) is configured to display, in a case that the notification unit (18) notifies the device of the second service, a display component that receives a request to change the notification destination from the device to a service provider of the service on a screen that notifies the second service, and
the display control unit (32, 42) is configured to display, in a case that the notification unit (18) notifies the device of the second service and in a case that the execution rate of the particular target module that is to be subjected to the second service is less than a threshold value, a comment recommending changing the notification destination from the device to the service provider of the service.

2. The information processing system of claim 1, wherein
the notification destination determination unit (14) is configured to:
determine a service provider of the service as the notification destination, in a case that the first service level information is less than the particular second service level information; and
determine the device as the notification destination, in a case that the first service level information is equal to or higher than the particular second service level information.

3. The information processing system of claim 2, wherein
in the service notification destination information, parts that the target includes are associated with the plurality of pieces of second service level information, respectively, and
the notification destination determination unit (14) is configured to determine the notification destination that performs a service to the particular target module that is to be subjected to the second service, based on a highest second service level information among the plurality of pieces of second service level information associated with the parts that the particular target module includes and the first service level information.

4. The information processing system of claim 1, wherein
the plurality of pieces of second service level information is associated with the second service in the service execution log information, and
the display control unit (32, 42) is configured to display the execution rate for each of the plurality of pieces of second service level information.

5. The information processing system of claim 4, further comprising a proposal unit (17) configured to propose a change of the first service level information in a case that one or more of execution rates calculated respectively for the plurality of pieces of second service level information are less than a threshold value.

6. The information processing system of claim 1, wherein
in a case that one or more of the execution rates calculated respectively for the plurality of pieces of second service level information are less than the threshold value, the proposal unit (17) is configured to propose the change of the first service level information corresponding to a particular second service level information having a highest execution rate among the plurality of pieces of second service level information having the execution rate equal to or more than the threshold value.

7. The information processing system of claim 6, wherein
the first service level information differs depending on the device, and
the display control unit (32, 42) is configured to display the first service level information for each device in addition to the execution rate.

8. The information processing system of claim 6, wherein
in a case that one or more of the execution rates calculated respectively for the plurality of pieces of second service level information is less than the threshold value and in a case that the first service level information is the lowest, the proposal unit (17) is configured to propose recommending execution of the second service.

9. The information processing system of claim 1, wherein
the display control unit (32, 42) is configured to display the execution rate of the particular target module that is to be subjected to the second service.

10. The information processing system of any one of claims 1 to 9, wherein
the user is an enterprise or a person.

11. The information processing system of claim 1, wherein
the notification destination determination unit (14) is configured to use information to determine the notification destination of the service, the information including service level information stored in an internal storage device or an external storage device,
the service level information is information regarding a level of service for which the user contracts as a degree of service quality assurance that the user desires, and
the service level information is associated with the user.

12. The information processing system of claim 1, wherein
the notification destination determination unit (14) is configured to use information to determine the notification destination of the service, the information including service level information stored in an internal storage device or an external storage device,
the service level information is associated with a target module that is to be subjected to the second service, and
the notification destination determination unit (14) is configured to determine the notification destination of the service based on the service level information associated with the target module.

13. The information processing system of claim 11, wherein
the service level information includes at least one of a skill level of a person in charge of a service work who performs the service, a current location, business hours, holidays, or a holiday calendar, and
the notification destination determination unit (14) is configured to determine the notification destination of the service, based on at least one of the skill level of the person in charge of a service work who performs the service, the current location, the business hours, the holidays, or the holiday calendar, which are associated with the service level information for which the user contracts for.

14. A service management system for determining execution of a service on a device, the service comprising maintenance, management, repair, or work required for maintenance, management, or repair, which are performed so that the device can continuously perform expected functions, the service management system comprising:
a service target device (103); and
the information processing system according to any one of the preceding claims.

15. A notification method performed by an information processing system for determining execution of a service on a device, the service comprising maintenance, management, repair, or work required for maintenance, management, or repair, which are performed so that the device can continuously perform expected functions, the method comprising:
determining (S2), by a notification destination determination unit, based on a device status, a notification destination of the service according to first service level information that is associated with a device and a user of the device and defines a service to be performed by the user, the service to be performed by the user being different depending on the user; and
notifying (S4), by a notification unit, the notification destination determined by the notification destination determination unit of execution of the service,
wherein the service is a second service different from a first service, the first service being periodically executed, the second service being additionally executed,
the method further comprising:
acquiring, from service notification destination information that associates a plurality of target modules each of which is to be subjected to the second service respectively with a plurality of pieces of second service level information each of which relates to a service difficulty level, particular second service level information corresponding to a particular target module that is to be subjected to the second service;
determining the notification destination to be notified of an occurrence of the second service, based on the particular second service level information and the first service level information;
displaying, based on service execution log information relating to execution of the second service, the service execution log information;
displaying an execution rate calculated based on a number of executed second services among the second service recorded in the service execution log information;
in a case that the notification unit notifies the device of the second service, displaying a display component that receives a request to change the notification destination from the device to a service provider of the service on a screen that notifies the second service; and
in a case that the notification unit notifies the device of the second service and in a case that the execution rate of the particular target module that is to be subjected to the second service is less than a threshold value, displaying a comment recommending changing the notification destination from the device to the service provider of the service.

16. A carrier means carrying computer readable codes which, when executed by an information processing system for determining execution of a service, cause the information processing system to carry out the notification method of claim 15.

## Patentansprüche

1. Informationsverarbeitungssystem zum Bestimmen der Ausführung einer Dienstleistung auf einem Gerät, wobei die Dienstleistung Wartung, Verwaltung, Reparatur oder Arbeiten umfasst, die für die Wartung, Verwaltung oder Reparatur erforderlich sind und so durchgeführt werden, dass das Gerät die erwarteten Funktionen kontinuierlich ausführen kann, wobei das Informationsverarbeitungssystem umfasst:
eine Benachrichtigungsziel-Bestimmungseinheit (14), die so konfiguriert ist, dass sie auf der Grundlage eines Gerätestatus ein Benachrichtigungsziel des Dienstes gemäß ersten Dienstgüteinformationen bestimmt, die einem Gerät und einem Benutzer des Geräts zugeordnet sind und einen vom Benutzer auszuführenden Dienst definieren, wobei der vom Benutzer auszuführende Dienst je nach Benutzer unterschiedlich ist; und
eine Benachrichtigungseinheit (18), die so konfiguriert ist, dass sie den von der Benachrichtigungszielbestimmungseinheit (14) bestimmten Benachrichtigungsempfänger über die Ausführung des Dienstes benachrichtigt,
wobei
der Dienst ein zweiter Dienst ist, der sich von einem ersten Dienst unterscheidet, wobei der erste Dienst periodisch ausgeführt wird und der zweite Dienst zusätzlich ausgeführt wird,
wobei
die Benachrichtigungsziel-Bestimmungseinheit (14) so konfiguriert ist, dass sie
aus Dienstbenachrichtigungszielinformationen, die eine Vielzahl von Zielmodulen, von denen jedes jeweils dem zweiten Dienst unterzogen werden soll, mit einer Vielzahl von zweiten Dienstlevelinformationen, von denen jede sich auf einen Dienstschwierigkeitsgrad bezieht, verknüpft, eine bestimmte zweite Dienstlevelinformation zu ermitteln, die einem bestimmten Zielmodul entspricht, das dem zweiten Dienst unterzogen werden soll; und
das Benachrichtigungsziel, das über das Auftreten des zweiten Dienstes benachrichtigt werden soll, auf der Grundlage der bestimmten zweiten Dienststufeneinformation und der ersten Dienststufeneinformation zu bestimmen,
wobei das Informationsverarbeitungssystem ferner eine Anzeigesteuereinheit (32, 42) umfasst, die so konfiguriert ist, dass sie auf der Grundlage von Dienstausführungsprotokollinformationen, die sich auf die Ausführung des zweiten Dienstes beziehen, die Dienstausführungsprotokollinformationen anzeigt,
wobei die Anzeigesteuereinheit (32, 42) so konfiguriert ist, dass sie eine Ausführungsrate anzeigt, die auf der Grundlage einer Anzahl ausgeführter zweiter Dienste unter den in den Dienstausführungsprotokollinformationen aufgezeichneten zweiten Diensten berechnet wird,
wobei
die Anzeigesteuereinheit (32, 42) so konfiguriert ist, dass sie in einem Fall, in dem die Benachrichtigungseinheit (18) das Gerät über den zweiten Dienst benachrichtigt, eine Anzeige-Komponente anzeigt, die eine Anforderung zum Ändern des Benachrichtigungsziels vom Gerät an einen Dienstanbieter des Dienstes auf einem Bildschirm empfängt, der den zweiten Dienst anzeigt, und
die Anzeigesteuereinheit (32, 42) so konfiguriert ist, dass sie in einem Fall, in dem die Benachrichtigungseinheit (18) das Gerät über den zweiten Dienst benachrichtigt, und in einem Fall, in dem die Ausführungsrate des bestimmten Zielmoduls, das dem zweiten Dienst unterzogen werden soll, unter einem Schwellenwert liegt, einen Kommentar anzeigt, der empfiehlt, das Benachrichtigungsziel vom Gerät auf den Dienstanbieter des Dienstes zu ändern.

2. Informationsverarbeitungssystem nach Anspruch 1, wobei
die Benachrichtigungsziel-Bestimmungseinheit (14) so konfiguriert ist, dass sie
einen Dienstanbieter des Dienstes als Benachrichtigungsziel zu bestimmen, wenn die erste Dienstgüteinformation kleiner ist als die bestimmte zweite Dienstgüteinformation; und
das Gerät als Benachrichtigungsziel festzulegen, wenn die erste Dienstgüteinformation gleich oder höher als die bestimmte zweite Dienstgüteinformation ist.

3. Informationsverarbeitungssystem nach Anspruch 2, wobei
in den Dienstbenachrichtigungszielinformationen Teile, die das Ziel umfasst, jeweils mit den mehreren zweiten Dienstgüteinformationen verknüpft sind, und
die Benachrichtigungszielbestimmungseinheit (14) so konfiguriert ist, dass sie das Benachrichtigungsziel, das einen Dienst für das bestimmte Zielmodul ausführt, das dem zweiten Dienst unterzogen werden soll, auf der Grundlage einer höchsten zweiten Dienstgüteklasse aus den mehreren zweiten Dienstgüteklassen, die den Teilen zugeordnet sind, die das bestimmte Zielmodul umfasst, und der ersten Dienstgüteklasse bestimmt.

4. Informationsverarbeitungssystem nach Anspruch 1, wobei
die mehreren zweiten Dienstgradinformationen dem zweiten Dienst in den Dienstausführungsprotokollinformationen zugeordnet sind, und
die Anzeigesteuereinheit (32, 42) so konfiguriert ist, dass sie die Ausführungsrate für jede der mehreren zweiten Dienstleistungsstufeneinträge anzeigt.

5. Informationsverarbeitungssystem nach Anspruch 4, ferner umfassend eine Vorschlagseinheit (17), die so konfiguriert ist, dass sie eine Änderung der ersten Dienstgüteinformationen vorschlägt, falls eine oder mehrere der jeweils für die mehreren zweiten Dienstgüteinformationen berechneten Ausführungsraten unter einem Schwellenwert liegen.

6. Informationsverarbeitungssystem nach Anspruch 1, wobei
in einem Fall, in dem eine oder mehrere der jeweils für die mehreren zweiten Servicelevel-Informationen berechneten Ausführungsraten kleiner als der Schwellenwert sind, die Vorschlagseinheit (17) so konfiguriert ist, dass sie die Änderung der ersten Servicelevel-Information vorschlägt, die einer bestimmten zweiten Servicelevel-Information mit der höchsten Ausführungsrate unter den mehreren zweiten Servicelevel-Informationen mit einer Ausführungsrate gleich oder größer als der Schwellenwert entspricht.

7. Informationsverarbeitungssystem nach Anspruch 6, wobei
die ersten Servicestufeninformationen je nach Gerät unterschiedlich sind, und
die Anzeigesteuereinheit (32, 42) so konfiguriert ist, dass sie zusätzlich zur Ausführungsrate die ersten Servicelevel-Informationen für jedes Gerät anzeigt.

8. Informationsverarbeitungssystem nach Anspruch 6, wobei
in einem Fall, in dem eine oder mehrere der jeweils für die mehreren zweiten Servicelevel-Informationen berechneten Ausführungsraten kleiner als der Schwellenwert sind, und in einem Fall, in dem die ersten Servicelevel-Informationen die niedrigsten sind, die Vorschlagseinheit (17) so konfiguriert ist, dass sie die Ausführung des zweiten Dienstes empfiehlt.

9. Informationsverarbeitungssystem nach Anspruch 1, wobei
die Anzeigesteuereinheit (32, 42) so konfiguriert ist, dass sie die Ausführungsrate des bestimmten Zielmoduls anzeigt, das der zweiten Dienstleistung unterzogen werden soll.

10. Informationsverarbeitungssystem nach einem der Ansprüche 1 bis 9, wobei
der Benutzer ein Unternehmen oder eine Person ist.

11. Informationsverarbeitungssystem nach Anspruch 1, wobei
die Benachrichtigungszielbestimmungseinheit (14) so konfiguriert ist, dass sie Informationen verwendet, um das Benachrichtigungsziel des Dienstes zu bestimmen, wobei die Informationen Dienstgüteinformationen umfassen, die in einem internen Speichergerät oder einem externen Speichergerät gespeichert sind,
die Dienstgüteinformationen Informationen über ein Dienstgüte-Niveau sind, das der Benutzer als Grad der Dienstgüte-Sicherheit, den der Benutzer wünscht, vertraglich vereinbart, und
die Dienstgüteinformationen dem Benutzer zugeordnet sind.

12. Informationsverarbeitungssystem nach Anspruch 1, wobei
die Benachrichtigungsziel-Bestimmungseinheit (14) so konfiguriert ist, dass sie Informationen verwendet, um das Benachrichtigungsziel des Dienstes zu bestimmen, wobei die Informationen Dienstgüteinformationen umfassen, die in einem internen Speichergerät oder einem externen Speichergerät gespeichert sind,
die Dienstgüteinformationen einem Zielmodul zugeordnet sind, das dem zweiten Dienst unterzogen werden soll, und
die Benachrichtigungsziel-Bestimmungseinheit (14) so konfiguriert ist, dass sie das Benachrichtigungsziel des Dienstes auf der Grundlage der dem Zielmodul zugeordneten Dienstgüteinformationen bestimmt.

13. Informationsverarbeitungssystem nach Anspruch 11, wobei
die Dienstgüteinformationen mindestens eines der folgenden Elemente umfassen: einen Qualifikationsgrad einer für eine Dienstleistung zuständigen Person, die die Dienstleistung erbringt, einen aktuellen Standort, Geschäftszeiten, Feiertage oder einen Feiertagskalender, und
die Benachrichtigungsziel-Bestimmungseinheit (14) so konfiguriert ist, dass sie das Benachrichtigungsziel des Dienstes auf der Grundlage mindestens eines der folgenden Elemente bestimmt: dem Qualifikationsniveau der für einen Dienstleistungsauftrag zuständigen Person, die den Dienst ausführt, dem aktuellen Standort, den Geschäftszeiten, den Feiertagen oder dem Feiertagskalender, die mit den Dienstleistungsinformationen verknüpft sind, für die der Benutzer einen Vertrag abgeschlossen hat.

14. Dienstverwaltungssystem zum Bestimmen der Ausführung eines Dienstes auf einem Gerät, wobei der Dienst Wartung, Verwaltung, Reparatur oder Arbeiten umfasst, die für die Wartung, Verwaltung oder Reparatur erforderlich sind und so durchgeführt werden, dass das Gerät die erwarteten Funktionen kontinuierlich ausführen kann, wobei das Dienstverwaltungssystem umfasst:
ein Dienstleistungszielgerät (103); und
das Informationsverarbeitungssystem gemäß einem der vorstehenden Ansprüche.

15. Benachrichtigungsverfahren, das von einem Informationsverarbeitungssystem durchgeführt wird, um die Ausführung eines Dienstes auf einem Gerät zu bestimmen, wobei der Dienst Wartung, Verwaltung, Reparatur oder Arbeiten umfasst, die für die Wartung, Verwaltung oder Reparatur erforderlich sind und so durchgeführt werden, dass das Gerät die erwarteten Funktionen kontinuierlich ausführen kann, wobei das Verfahren umfasst:
Bestimmen (S2) einer Benachrichtigungsdestination des Dienstes durch eine Benachrichtigungsdestinationsbestimmungseinheit auf der Grundlage eines Gerätestatus gemäß ersten Dienstlevelinformationen, die einem Gerät und einem Benutzer des Geräts zugeordnet sind und einen vom Benutzer auszuführenden Dienst definieren, wobei der vom Benutzer auszuführende Dienst je nach Benutzer unterschiedlich ist; und
Benachrichtigen (S4) durch eine Benachrichtigungseinheit des Benachrichtigungsziels, das von der Benachrichtigungsziel-Bestimmungseinheit für die Ausführung des Dienstes bestimmt wurde,
wobei der Dienst ein zweiter Dienst ist, der sich von einem ersten Dienst unterscheidet, wobei der erste Dienst periodisch ausgeführt wird und der zweite Dienst zusätzlich ausgeführt wird,
wobei das Verfahren ferner umfasst:
Erfassen aus Dienstbenachrichtigungszielinformationen, die mehrere Zielmodule, von denen jedes jeweils dem zweiten Dienst unterzogen werden soll, mit mehreren zweiten Dienstlevel-Informationen verknüpfen, von denen jede sich auf einen Dienstschwierigkeitsgrad bezieht, bestimmter zweiter Dienstlevel-Informationen, die einem bestimmten Zielmodul entsprechen, das dem zweiten Dienst unterzogen werden soll;
Bestimmen des Benachrichtigungsziels, das über das Auftreten des zweiten Dienstes benachrichtigt werden soll, basierend auf den bestimmten Informationen über die zweite Dienstebene und den Informationen über die erste Dienstebene;
Anzeigen der Dienstausführungsprotokollinformationen auf der Grundlage von Dienstausführungsprotokollinformationen, die sich auf die Ausführung des zweiten Dienstes beziehen;
Anzeigen einer Ausführungsrate, die auf der Grundlage einer Anzahl ausgeführter zweiter Dienste unter den in den Dienstausführungsprotokollinformationen aufgezeichneten zweiten Diensten berechnet wird;
in einem Fall, in dem die Benachrichtigungseinheit das Gerät über den zweiten Dienst benachrichtigt, Anzeigen einer Anzeigeeinheit, die eine Anforderung zum Ändern des Benachrichtigungsziels vom Gerät an einen Dienstanbieter des Dienstes auf einem Bildschirm empfängt, der den zweiten Dienst anzeigt; und
in einem Fall, in dem die Benachrichtigungseinheit das Gerät über den zweiten Dienst benachrichtigt und in einem Fall, in dem die Ausführungsrate des bestimmten Zielmoduls, das dem zweiten Dienst unterzogen werden soll, unter einem Schwellenwert liegt, Anzeigen eines Kommentars, der empfiehlt, die Benachrichtigungszieladresse vom Gerät auf den Dienstanbieter des Dienstes zu ändern.

16. Trägermedium, das computerlesbare Codes trägt, die, wenn sie von einem Informationsverarbeitungssystem zur Bestimmung der Ausführung eines Dienstes ausgeführt werden, das Informationsverarbeitungssystem veranlassen, das Benachrichtigungsverfahren gemäß Anspruch 15 auszuführen.

## Revendications

1. Système informatique permettant de déterminer l'exécution d'un service sur un appareil, le service comprenant la maintenance, la gestion, la réparation, ou les tâches requises pour la maintenance, la gestion ou la réparation, qui sont réalisées pour que l'appareil puisse réaliser les fonctions attendues en continu, le système informatique comprenant :
une unité de détermination de destination de notification (14) configurée pour déterminer, compte tenu de l'état de l'appareil, une destination de notification du service conformément à des informations de niveau de premier service associées à un appareil et à un utilisateur de l'appareil et définissant un service à réaliser par l'utilisateur, le service à réaliser par l'utilisateur étant différent selon l'utilisateur, et
une unité de notification (18) configurée pour notifier l'exécution du service à la destination de notification déterminée par l'unité de détermination de destination de notification (14) ;
étant entendu que
le service est un deuxième service différent d'un premier service, le premier service étant exécuté périodiquement, le deuxième service étant exécuté en supplément,
et étant entendu que
l'unité de détermination de destination de notification (14) est configurée pour :
acquérir, à partir d'informations de destination de notification de service qui associent respectivement une pluralité de modules cibles, devant être chacun soumis au deuxième service, à une pluralité d'éléments d'information de niveau de deuxième service respectivement liés à un niveau de difficulté de service, une information de niveau de deuxième service particulière correspondant à un module cible particulier devant être soumis au deuxième service, et
déterminer la destination de notification à laquelle doit être notifiée la survenue du deuxième service, compte tenu de l'information de niveau de deuxième service particulière et des informations de niveau de premier service ;
le système informatique comprenant en outre une unité de commande d'affichage (32, 42) configurée pour afficher, compte tenu d'informations de journal d'exécution de service liées à l'exécution du deuxième service, les informations de journal d'exécution de service,
ladite unité de commande d'affichage (32, 42) étant configurée pour afficher un taux d'exécution calculé compte tenu du nombre de deuxièmes services exécutés parmi les deuxièmes services répertoriés dans les informations de journal d'exécution de service ;
étant entendu que
l'unité de commande d'affichage (32, 42) est configurée pour afficher, dans un cas où l'unité de notification (18) notifie à l'appareil ledit deuxième service, un composant d'affichage qui reçoit une demande visant à modifier la destination de notification, de l'appareil en un fournisseur de service qui fournit ledit service, sur un écran qui notifie ledit deuxième service, et
l'unité de commande d'affichage (32, 42) est configurée pour afficher, dans un cas où l'unité de notification (18) notifie à l'appareil ledit deuxième service et dans un cas où le taux d'exécution du module cible particulier devant être soumis au deuxième service est inférieur à une valeur seuil, un commentaire recommandant la modification de la destination de notification, de l'appareil au fournisseur de service qui fournit ledit service.

2. Système informatique selon la revendication 1, dans lequel
l'unité de détermination de destination de notification (14) est configurée pour :
déterminer un fournisseur de service qui fournit ledit service comme destination de notification, dans un cas où les informations de niveau de premier service sont inférieures à l'information de niveau de deuxième service particulière, et
déterminer le dispositif comme destination de notification, dans un cas où les informations de niveau de premier service sont supérieures ou égales à l'information de niveau de deuxième service particulière.

3. Système informatique selon la revendication 2, dans lequel
dans les informations de destination de notification de service, des pièces incluses dans la cible sont respectivement associées à la pluralité d'éléments d'information de niveau de deuxième service, et
l'unité de détermination de destination de notification (14) est configurée pour déterminer la destination de notification qui réalise un service pour le module cible particulier devant être soumis au deuxième service, compte tenu d'une information de niveau de deuxième service la plus élevée parmi la pluralité d'éléments d'information de niveau de deuxième service associés aux pièces incluses dans le module cible particulier et aux informations de niveau de premier service.

4. Système informatique selon la revendication 1, dans lequel
la pluralité d'éléments d'information de niveau de deuxième service est associée au deuxième service dans les informations de journal d'exécution de service, et
l'unité de commande d'affichage (32, 42) est configurée pour afficher le taux d'exécution pour chacun des éléments de la pluralité d'éléments d'information de niveau de deuxième service.

5. Système informatique selon la revendication 4, comprenant en outre une unité de proposition (17) configurée pour proposer une modification d'information de niveau de premier service dans un cas où au moins un taux d'exécution respectivement calculé pour la pluralité d'éléments d'information de niveau de deuxième service est inférieur à une valeur seuil.

6. Système informatique selon la revendication 1, dans lequel
dans un cas où au moins un des taux d'exécution respectivement calculés pour la pluralité d'éléments d'information de niveau de deuxième service est inférieur à la valeur seuil, l'unité de proposition (17) est configurée pour proposer la modification de l'information de niveau de premier service correspondant à une information de niveau de deuxième service particulière ayant le taux d'exécution le plus élevé parmi la pluralité d'éléments d'information de niveau de deuxième service dont le taux d'exécution est supérieur ou égal à la valeur seuil.

7. Système informatique selon la revendication 6, dans lequel
l'information de niveau de premier service diffère en fonction de l'appareil, et
l'unité de commande d'affichage (32, 42) est configurée pour afficher les informations de niveau de premier service pour chaque appareil en sus du taux d'exécution.

8. Système informatique selon la revendication 6, dans lequel
dans un cas où au moins un des taux d'exécution respectivement calculés pour la pluralité d'éléments d'information de niveau de deuxième service est inférieur à la valeur de seuil et dans un cas où les informations de niveau de premier service sont au plus bas, l'unité de proposition (17) est configurée pour proposer de recommander l'exécution du deuxième service.

9. Système informatique selon la revendication 1, dans lequel
l'unité de commande d'affichage (32, 42) est configurée pour afficher le taux d'exécution du module cible particulier devant être soumis au deuxième service.

10. Système informatique selon l'une quelconque des revendications 1 à 9, dans lequel
l'utilisateur est une entreprise ou une personne.

11. Système informatique selon la revendication 1, dans lequel
l'unité de détermination de destination de notification (14) est configurée pour utiliser des informations pour déterminer la destination de notification de service, les informations comprenant des informations de niveau de service stockées dans un dispositif de stockage interne ou un dispositif de stockage externe,
les informations de niveau de service sont des informations concernant un niveau de service, pour lequel l'utilisateur s'est engagé, en tant que degré d'assurance de la qualité de service souhaitée par l'utilisateur, et
les informations de niveau de service sont associées à l'utilisateur.

12. Système informatique selon la revendication 1, dans lequel
l'unité de détermination de destination de notification (14) est configurée pour utiliser des informations pour déterminer la destination de notification du service, les informations comprenant des informations de niveau de service stockées dans un dispositif de stockage interne ou un dispositif de stockage externe,
les informations de niveau de service sont associées à un module cible devant être soumis au deuxième service, et
l'unité de détermination de destination de notification (14) est configurée pour déterminer la destination de notification du service compte tenu des informations de niveau de service associées au module cible.

13. Système informatique selon la revendication 11, dans lequel
les informations de niveau de service comprennent un niveau de compétence d'une personne chargée d'une tâche de service qui réalisera le service, l'emplacement actuel, les heures d'ouverture, les dates de congés et/ou un calendrier de congés, et
l'unité de détermination de destination de notification (14) est configurée pour déterminer la destination de notification du service, compte tenu du niveau de compétences de la personne chargée de la tâche de service qui réalisera le service, de l'emplacement actuel, des heures d'ouverture, des dates de congés et/ou du calendrier des congés qui sont associés aux informations de niveau de service pour lequel l'utilisateur s'est engagé.

14. Système de gestion de service permettant de déterminer l'exécution d'un service sur un appareil, le service comprenant la maintenance, la gestion, la réparation, ou les tâches requises pour la maintenance, la gestion ou la réparation, qui sont réalisées pour que l'appareil puisse réaliser les fonctions attendues en continu, le système de gestion de service comprenant :
un appareil cible de service (103), et
le système informatique selon l'une quelconque des revendications précédentes.

15. Procédé de notification réalisé par un système informatique permettant de déterminer l'exécution d'un service sur un appareil, le service comprenant la maintenance, la gestion, la réparation, ou les tâches requises pour la maintenance, la gestion ou la réparation, qui sont réalisées pour que l'appareil puisse réaliser les fonctions attendues en continu, le procédé comprenant :
la détermination (S2), par une unité de détermination de destination de notification, compte tenu de l'état de l'appareil, d'une destination de notification du service conformément à des informations de niveau de premier service associées à un appareil et à un utilisateur de l'appareil et définissant un service à réaliser par l'utilisateur, le service à réaliser par l'utilisateur étant différent selon l'utilisateur, et
la notification (S4) de l'exécution de service, par une unité de notification, à la destination de notification déterminée par l'unité de détermination de destination de notification ;
étant entendu que le service est un deuxième service différent d'un premier service, le premier service étant exécuté périodiquement, le deuxième service étant exécuté en supplément ;
le procédé comprenant en outre :
l'acquisition, à partir d'informations de destination de notification de service qui associent respectivement une pluralité de modules cibles, devant être chacun soumis au deuxième service, à une pluralité d'éléments d'information de niveau de deuxième service respectivement liés à un niveau de difficulté de service, d'une information de niveau de deuxième service particulière correspondant à un module cible particulier devant être soumis au deuxième service ;
la détermination de la destination de notification à laquelle doit être notifiée la survenue du deuxième service, compte tenu de l'information de niveau de deuxième service particulière et des informations de niveau de premier service ;
l'affichage, compte tenu d'informations de journal d'exécution de service liées à l'exécution du deuxième service, des informations de journal d'exécution de service ;
l'affichage d'un taux d'exécution calculé compte tenu du nombre de deuxièmes services exécutés parmi les deuxièmes services répertoriés dans les informations de journal d'exécution de service ;
dans un cas où l'unité de notification notifie à l'appareil ledit deuxième service, l'affichage d'un composant d'affichage qui reçoit une demande visant à modifier la destination de notification, de l'appareil en un fournisseur de service qui fournit ledit service, sur un écran qui notifie ledit deuxième service ; et
dans un cas où l'unité de notification notifie à l'appareil ledit deuxième service et dans un cas où le taux d'exécution du module cible particulier devant être soumis au deuxième service est inférieur à une valeur seuil, l'affichage d'un commentaire recommandant la modification de la destination de notification, de l'appareil au fournisseur de service qui fournit ledit service.

16. Moyen de support portant des codes lisibles par ordinateur qui, lorsqu'ils sont exécutés par un système informatique permettant de déterminer l'exécution d'un service, amènent le système informatique à réaliser le procédé de notification selon la revendication 15.
